(19) Europäisches Patentamt
European Patent Office
Office européen des brevets

(11) **EP 4 528 631 A1**

(12) **EUROPEAN PATENT APPLICATION**
published in accordance with Art. 153(4) EPC

(43) Date of publication:
**26.03.2025 Bulletin 2025/13**

(51) International Patent Classification (IPC):
**G06T 3/4046** (2024.01)　　**G06T 3/4076** (2024.01)
**G06T 5/60** (2024.01)　　**G06T 5/20** (2006.01)
**G06N 3/08** (2023.01)

(21) Application number: **24790251.3**

(22) Date of filing: **30.07.2024**

(86) International application number:
**PCT/KR2024/011131**

(87) International publication number:
**WO 2025/033816 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023　KR 20230102281**
**14.02.2024　KR 20240021265**

(71) Applicants:
• **Samsung Electronics Co., Ltd**
**Suwon-si, Gyeonggi-do 16677 (KR)**
• **Seoul National University R&DB Foundation**
**Seoul 08826 (KR)**

(72) Inventor: **The designation of the inventor has not yet been filed**

(74) Representative: **Appleyard Lees IP LLP**
**15 Clare Road**
**Halifax HX1 2HY (GB)**

(54) **IMAGE PROCESSING DEVICE, OPERATING METHOD THEREOF, AND NEURAL NETWORK TRAINING METHOD**

(57)　An image processing apparatus, including: at least one processor; and a memory configured to store one or more instructions which, when executed by the at least one processor, cause the image processing apparatus to: obtain a neural network model for performing image quality processing on an input image; calculate a plurality of gradients by partially differentiating weights of the neural network model with respect to a loss of the neural network model, by applying training data corresponding to the input image to the neural network model; remove at least one gradient from among the plurality of gradients by applying a gradient mask including gradient pruning information to the plurality of gradients; train the neural network model by updating the weights of the neural network model based on one or more remaining gradients from among the plurality of gradients; and obtain a quality-processed output image based on the input image, using the trained neural network model

FIG. 1

EP 4 528 631 A1

**Description**

TECHNICAL FIELD

The disclosure relates to an image processing apparatus, a method of the image processing apparatus, and a method of training a neural network, and more particularly, to an image processing apparatus that performs image-quality processing on a low-resolution image, and a method of training a neural network.

BACKGROUND

As the display screen size and resolution of image processing apparatuses increases, super-resolution (SR) technology may be used to convert low-resolution (LR) images into high-resolution (HR) images.

Along with the development of deep learning technology, various types of learning-based SR technology are being developed. Learning-based SR technology may be used to learn or train an artificial intelligence (AI) model in the cloud and then perform inference using the learned AI model. Learning-based SR technology may exhibit excellent performance when quality characteristics of a training image are similar to those of an input image to be actually processed, but may lead to a domain gap problem in which the quality of image significantly degrades when characteristics of the image to be actually processed differ from an input image quality assumed during training. The domain gap problem may occur due to a characteristic mismatch between a training image by which an AI model is trained and the image to be actually processed.

Some approaches to addressing this domain gap problem involve upscaling technique which uses on-device learning to train and adapt an AI model according to an image to be actually processed. For example, an AI model may be connected to an edge device such as a television (TV) or mobile device, and thus the AI model may be trained using an input image as training data in real time, and the input image may be upscaled using the trained AI model. On-device learning may refer to an operation of training an AI model mounted on an apparatus in real time by an edge device collecting and calculating information itself without using a cloud server. An edge device may refer to an electronic device capable of processing data in real time by itself.

However, because an edge device may have limited computational resources and internal memory, it may be beneficial to reduce the amounts of computation and resource usage used for training an AI model and shorten the time used for the training.

Because an edge device to which an AI model is connected may have limited computational resources, an integer (INT) operation may be preferred over a floating-point (FP) operation. An FP operation may refer to an arithmetic operation performed on FP data expressed as a real number including a part after a decimal point, and the INT operation may refer to an arithmetic operation performed on INT data expressed as an integer that does not include a part after a decimal point. Because an INT operation may not deal with the precision after a decimal point, unlike an FP operation, an amount of computation used for the INT operation may be less than an amount of computation used for the FP operation. In order for the edge device to perform an INT operation, a quantization process of converting FP data into INT data may be involved. Because the quantization process may include approximating a continuous value (e.g., FP data) using a discrete value (e.g., INT data), a quantization error, which may refer to an error occurring during the approximation process, may occur. When an AI model is trained based on an INT operation, quantization errors may result in data loss or accuracy reduction, so performance may be reduced compared to an AI model trained based on an FP operation. Therefore, it may be beneficial to reduce or minimize the amount of computation while preventing degradation in performance of the AI model, in a process, performed by the edge device, of training the AI model.

DISCLOSURE

TECHNICAL SOLUTION

In accordance with an aspect of the disclosure, an image processing apparatus includes: at least one processor; and a memory configured to store one or more instructions which, when executed by the at least one processor, cause the image processing apparatus to: obtain a neural network model for performing image quality processing on an input image; calculate a plurality of gradients by partially differentiating weights of the neural network model with respect to a loss of the neural network model, by applying training data corresponding to the input image to the neural network model; remove at least one gradient from among the plurality of gradients by applying a gradient mask including gradient pruning information to the plurality of gradients; train the neural network model by updating the weights of the neural network model based on one or more remaining gradients from among the plurality of gradients; and obtain a quality-processed output image based on the input image, using the trained neural network model.

In accordance with an aspect of the disclosure, an operation method of an image processing apparatus includes:

obtaining a neural network model for performing image quality processing on an input image; calculating a plurality of gradients by partially differentiating weights of the neural network model with respect to a loss of the neural network model, by applying training data corresponding to the input image to the neural network model; removing at least one gradient from among the plurality of gradients by applying a gradient mask including gradient pruning information to the plurality of gradients; training the neural network model by updating weights of the neural network model based on one or more remaining gradients from among the plurality of gradients; and obtaining a quality-processed output image based on the input image, using on the trained neural network model.

In accordance with an aspect of the disclosure, a method of training a neural network model includes: obtaining a plurality of low-resolution training images having image qualities which are degraded into a plurality of types of deteriorated image quality based on a training image; training the neural network model by applying the training image and the plurality of low-resolution training images to the neural network model; calculating a plurality of gradients of the trained neural network model by applying the training image and the plurality of low-resolution training images to the trained neural network model; and generating a gradient mask for removing at least one gradient from among the plurality of gradients.

DESCRIPTION OF DRAWINGS

The above and other aspects, features, and advantages of certain embodiments of the present disclosure will be more apparent from the following description taken in conjunction with the accompanying drawings, in which:

FIG. 1 is a view for explaining an image processing apparatus outputting an image of which image quality has been processed, according to an embodiment of the disclosure.

FIG. 2 is a block diagram for describing a process of training a meta model, according to an embodiment of the disclosure.

FIG. 3 is a block diagram of an internal structure of an image processing apparatus according to an embodiment of the disclosure.

FIG. 4 is a diagram for explaining an operation, performed by an image processing apparatus according to an embodiment of the disclosure, of determining the image quality of an input image.

FIG. 5 is a diagram for explaining an operation, performed by an image processing apparatus according to an embodiment of the disclosure, of adapting a meta model in correspondence with an input image. FIG. 6 is a view for describing a convolution operation performed in a convolutional layer of a meta model according to an embodiment of the disclosure.

FIG. 7 is a view for describing a relationship between a filter and a gradient in the convolutional layer of the meta model according to an embodiment of the disclosure.

FIG. 8 is a diagram for explaining a result of gradient pruning according to an embodiment of the disclosure.

FIG. 9 is a flowchart of an operation method of an image processing apparatus according to an embodiment of the disclosure.

FIG. 10 is a block diagram of an internal structure of an image processing apparatus according to an embodiment of the disclosure.

FIG. 11 is a view for explaining a quantization operation of an image processing apparatus, according to an embodiment of the disclosure.

FIG. 12 is a view for explaining a quantization operation of an image processing apparatus, according to an embodiment of the disclosure.

FIG. 13 is a flowchart of an operation method of an image processing apparatus according to an embodiment of the disclosure.

FIG. 14 is a block diagram of an internal structure of a server according to an embodiment of the disclosure.

FIG. 15 is a flowchart of a method, performed by a server, of training a meta model, according to an embodiment of the disclosure.

FIG. 16 is a diagram for explaining a process, performed by a server, of training a meta model, according to an embodiment of the disclosure.

FIG. 17 is a flowchart of a method, performed by a server, of obtaining a gradient mask, according to an embodiment of the disclosure.

FIG. 18A is a diagram for explaining a process, performed by a server, of calculating a gradient through a trained neural network, according to an embodiment of the disclosure.

FIG. 18B is a diagram for explaining a process, performed by a server, of obtaining a gradient mask, according to an embodiment of the disclosure.

FIG. 19 is a flowchart of a method, performed by a server, of training a meta model, according to an embodiment of the disclosure.

FIG. 20 is a block diagram of an image processing apparatus according to an embodiment of the disclosure.

FIG. 21 is a flowchart of an operation method of an image processing apparatus and a server, according to an embodiment of the disclosure.

MODE

Throughout the disclosure, the expression "at least one of a, b or c" indicates only a, only b, only c, both a and b, both a and c, both b and c, all of a, b, and c, or variations thereof.

Embodiments of the disclosure are described in detail herein with reference to the accompanying drawings so that this disclosure may be easily performed by one of ordinary skill in the art to which the disclosure pertains. The disclosure may, however, be embodied in many different forms and should not be construed as being limited to the examples set forth herein.

Although general terms may be used to describe some embodiments of the disclosure in consideration of the functions thereof, these general terms may vary according to intentions of one of ordinary skill in the art, case precedents, the advent of new technologies, or the like. Hence, the terms must be defined based on their meanings and the contents of the entire disclosure, not by simply stating the terms.

The terms used herein are intended to merely describe particular embodiments, and are not intended to limit the scope of the disclosure.

Throughout the disclosure, when a first element is referred to as being "connected" or "coupled" to a second element, the first element may be directly connected or coupled to the second element, or can be electrically connected or coupled to the second element with intervening elements interposed therebetween.

The use of the terms "a" and "an" and "the" and similar referents in the context of describing the disclosure (especially in the context of the following claims) are to be construed to cover both the singular and the plural. Also, the steps of all methods described herein can be performed in any suitable order unless otherwise indicated herein or otherwise clearly contradicted by context. Embodiments of the disclosure are not limited to the described order of the operations.

Thus, the expression "according to an embodiment "used in the entire disclosure does not necessarily indicate the same embodiment.

Embodiments of the disclosure may be described in terms of functional block components and various processing steps. Some or all of these functional blocks may be implemented using various numbers of hardware and/or software configurations that perform specific functions. For example, the functional blocks of the disclosure may be implemented by one or more microprocessors, or by circuit configurations for a certain function. For example, the functional blocks of the disclosure may be implemented in various programming or scripting languages. The functional blocks may be implemented as algorithms executed in one or more processors. The words "mechanism," "element," "means," and "configuration" are used broadly and are not limited to mechanical or physical embodiments,

Furthermore, the connecting lines or connectors between components shown in the various figures presented are intended to represent exemplary functional relationships and/or physical or logical couplings between the components. In an actual device, a connection between components may be represented by various functional connections, physical connections, or circuit connections that are replaceable or added.

The terms "processor" may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The terms "unit" and "module", and terms ending in the suffixes "-er" and "-or", may refer to an element in which at least one function or operation is performed, and may be implemented as hardware, software, or a combination of hardware and software.

The term "user" used herein may refer to a person who uses an image processing apparatus, and may include a consumer, an evaluator, a viewer, an administrator, or an installation engineer. The term "manufacturer" used herein may refer to a manufacturer that manufactures an image processing apparatus and/or components included in the image processing apparatus.

An "image" used herein may indicate a still image, a picture, a frame, a moving picture including a plurality of continuous still images, or a video.

A "neural network" used herein may refer to a representative example of an artificial neural network model that

**EP 4 528 631 A1**

mimics a nerve or neuron within a brain, and is not limited to an artificial neural network model using a specific algorithm. The neural network may also be referred to as a deep neural network.

A "parameter" as used herein, which may be a value used in a computation process of each layer included in a neural network, may be used, for example, when an input value is applied to a predetermined computational formula. The parameter, which may be a value set as a result of training, may be updated through separate training data according to need.

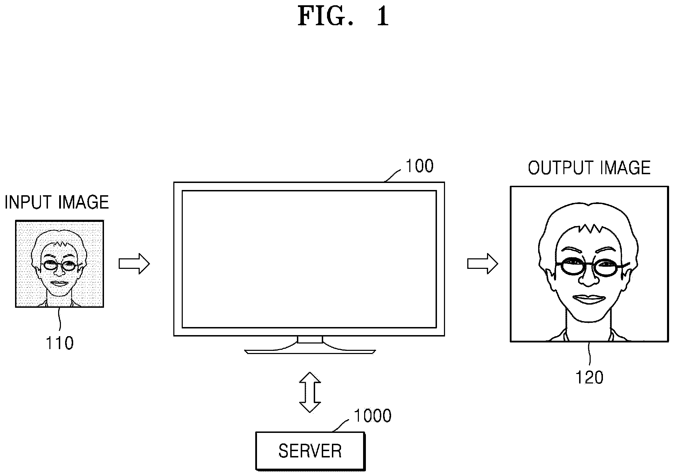

FIG. 1 is a view for explaining an image processing apparatus outputting an image of which an image quality has been processed, according to an embodiment of the disclosure.

Referring to FIG. 1, an image processing apparatus 100 may be an electronic device capable of processing an image and outputting a processed image. According to an embodiment of the disclosure, the image processing apparatus 100 may be implemented using various types of electronic devices including displays. For example, the image processing apparatus 100 may be any type of electronic device, such as a television (TV), a mobile phone, a tablet personal computer (PC), a digital camera, a camcorder, a laptop computer, a desktop computer, an e-book terminal, a digital broadcast terminal, personal digital assistants (PDAs), a portable multimedia player (PMP), a navigation device, an MP3 player, or a wearable device.

The image processing apparatus 100 may output a video. The video may include a plurality of frames. The video may include items such as TV programs provided by content providers or various movies or dramas through video on demand (VOD) services. The content provider may refer to a terrestrial broadcasting station or cable broadcasting station, or an over the top (OTT) service provider or an Internet protocol television (IPTV) service provider that provides various contents including video to consumers. The video is captured, compressed, and transmitted to the image processing apparatus 100, and is reconstructed and output by the image processing apparatus 100. Due to, for example, a limitation of the physical characteristics of a device used to capture the video and a limited bandwidth, information may be lost, which may cause distortion of an image. The quality of an image may deteriorate due to distortion of the image.

The image processing apparatus 100 according to an embodiment of the disclosure may process the image quality of an image. The image processing apparatus 100 may process the image quality of video content having image quality that has been degraded due to image distortion. For example, the image processing apparatus 100 may obtain an output image 120 by performing image quality processing on an input image 110. For example, the image processing apparatus 100 may obtain a high-resolution (or high-quality) output image by upscaling a low-resolution (or low-quality) input image using an image quality processing model.

The image quality processing model according to an embodiment of the disclosure may include an inference network that implements a super-resolution (SR) algorithm capable of converting a low-resolution image into a high-resolution image. For example, the image quality processing model may include a neural network model trained using training data corresponding to the input image 110 from a neural network model obtained based on the quality of the input image 110.

The image processing apparatus 100 according to an embodiment of the disclosure may train the image quality processing model included in the image processing apparatus 100, in real time by itself. An image quality processing model according to an embodiment of the disclosure may be referred to as a meta model. A meta model may refer to a neural network model capable of quickly learning or generalizing new data. The meta model may be trained in advance using learning data corresponding to various pieces of quality information stored in the cloud, and may then be used to process the image quality of an actual image in the image processing apparatus 100. The image processing apparatus 100 may reduce a domain gap problem by training the meta model using the actual image as training data. Because the meta model may be a neural network pre-trained for various image quality degradation scenarios, a training process of adjusting the parameters of the meta model, based on the input image 110, may be simplified. For example, the number of iterations in a gradient descent method of adjusting the parameters of the meta model may be reduced. The image processing apparatus 100 may generate an adaptive meta model in the input image 110 through on-device learning. According to embodiments, a process, performed by the image processing apparatus 100, of training the meta model using the input image 110 may be referred to as meta model adaptive learning.

To train a neural network model, training data including a pair of images (e.g., a low-resolution image and a high-resolution image) may be used. A neural network model may be trained through a process in which the parameters of a neural network model may be updated to reduce a difference (e.g., a training error or loss) between an image output by processing a low-resolution image included in training data through the neural network model and a high-resolution image included in the training data. Parameters of the neural network model may be updated by performing multiple iterations. A process of training the neural network model may include a forward propagation process and a back propagation process. For example, the back propagation process of the neural network model may include a process of calculating a difference between a prediction result of the neural network model using the training data and an actual result of the neural network model, a process of calculating a gradient based on the difference, and a process of updating the parameters of the neural network. Accordingly, the back propagation process may further require three times the amount of computation as the amount of computation in the forward propagation process.

According to an embodiment of the disclosure, the image processing apparatus 100 may reduce a back propagation operation process using gradient pruning. The image processing apparatus 100 may calculate a gradient for the meta model by applying the training data corresponding to the input image 110 to the meta model. The image processing apparatus 100 may remove a portion of the gradient using gradient pruning. The image processing apparatus 100 may update the parameters of the meta model using the remaining gradient that has not been removed. The image processing apparatus 100 may quickly adapt the meta model to the input image 110 and train the meta model, using gradient pruning.

For example, the image processing apparatus 100 may calculate a number of gradient filters corresponding to the number of weight filters by applying an input image to the neural network model having a predetermined number of weight filters. The image processing apparatus 100 may maintain a gradient filter with a large calculated gradient value and remove a gradient filter with a small gradient value. The gradient filter may be used to update the weight filter, and the gradient filter with a large gradient value may update a weight to a large degree. The greater the degree to which the weight is updated in a direction of minimizing loss, the more the high-resolution performance of the neural network model may be improved.

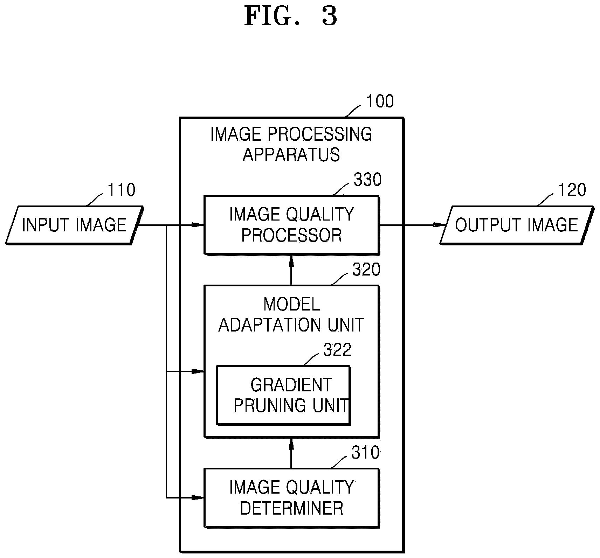

Because the image processing apparatus 100 may selectively update the weight of the neural network in consideration of the degree to which the weight contribute to improving high-resolution performance, the amount of computation in the back propagation process may be reduced. An example of this is described in detail with reference to FIGS. 3 through 9.

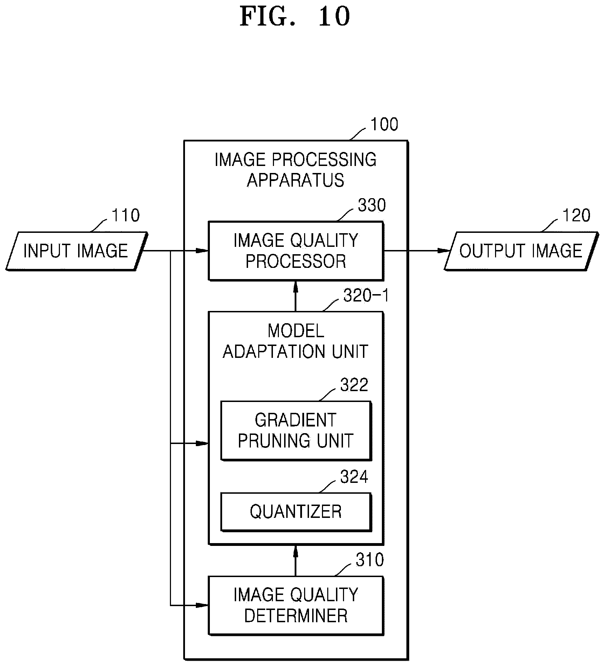

According to an embodiment of the disclosure, the image processing apparatus 100 may train the meta model, based on an integer (INT) operation, in an adaptive learning process that is performed on an integer (INT) operation using the input image 110. The image processing apparatus 100 may perform an arithmetic operation with respect to the meta model, based on a weight expressed as INT data. For example, the image processing apparatus 100 may perform a convolution operation using an INT weight. Accordingly, an amount of computation may decrease, compared to when the image processing apparatus 100 executes an operation using a floating-point (FP) weight. In addition, a quantization error that occurs in a process of converting FP data to INT data may be minimized. An example of this is described in detail with reference to FIGS. 10 through 13.

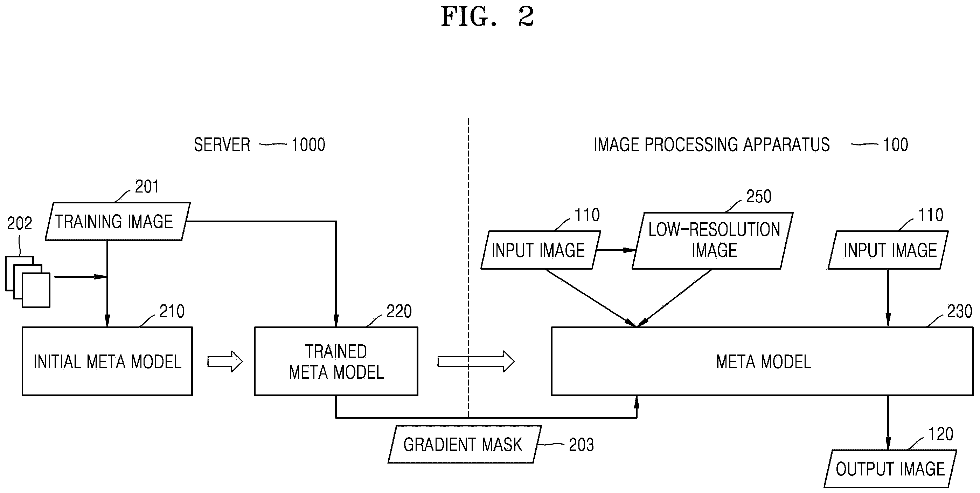

An example of an operation in which the meta model is first trained based on training data in the server 1000 and is adaptively trained based on the input image 110 in the image processing apparatus 100 according to an embodiment is described below with reference to FIG. 2.

FIG. 2 is a block diagram for describing a process of training a meta model, according to an embodiment of the disclosure.

Referring to FIG. 2, the process of training a meta model may be performed by the server 1000 and the image processing apparatus 100. The training process in the server 1000 may be expressed as primary training, a training phase, or meta-learning. The training process in the image processing apparatus 100 may be expressed as secondary training, a test phase, adaptive learning, or meta-adaptation.

The meta model may be a model that has experienced and learned a training process performed in the test phase in advance through a prior model training process, and may refer to a neural network model capable of quickly learning or generalizing new data. A technology or process of training such a meta model with the training process may be referred to as meta-learning.

A process or technology for training a meta model so that it is able to be processed quickly according to new data may be referred to as meta-adaptation. For example, the meta model may be a neural network model that is adaptive to new data. For example, the meta model may be trained so that it is able to be processed quickly according to the input image 110, and, in the sense that the meta model is trained to adapt to the input image 110, the meta model may be referred to as being adapted.

In a primary training phase, a trained meta model 220 may be obtained based on an initial meta model 210. In a secondary training phase, a meta model 230 which is adapted to the input image 110 corresponding to the trained meta model 220 may be obtained. According to an embodiment of the disclosure, the primary training phase may be performed by the server 1000, and the secondary training phase may be performed by the image processing apparatus 100. However, this is only an example, and embodiments are not limited thereto. For example, in some embodiments the primary and secondary training phases may be implemented using one of the image processing apparatus and the server 1000, or by any other device or apparatus.

The server 1000 may obtain the initial meta model 210. The initial meta model 210 may have an initialized weight. The server 1000 may train the initial meta model 210, based on a training image 201 and a plurality of image quality deterioration kernels 202 used to deteriorate the image quality of the training image 201 into a plurality of types of deteriorated image quality. For example, the server 1000 may generate a plurality of images which are degraded in different ways from the training image 201.

The server 1000 may obtain a plurality of modified neural networks by applying each of the plurality of image quality deterioration kernels 202 to the training image 201. The server 1000 may learn various image quality degradation scenarios through the plurality of modified neural networks, and may perform repeated training of the meta model to have minimal errors in processing the various image quality degradation scenarios. The server 1000 may obtain the trained meta model 220 by performing meta learning using the training image 201. The trained meta model 220 may have an optimal weight capable of processing the various image quality degradation scenarios. The trained meta model 220 may be referred to as a meta-learned neural network.

The server 1000 may calculate a gradient mask 203 by inputting the training image 201 to the trained meta model 220. The server 1000 may calculate a gradient from the trained meta model 220 by simulating a meta-learning process. The gradient may represent the partial differentiation with respect to the parameters of the neural network model as a vector. The server 1000 may generating the gradient mask 203 for pruning the gradient, by identifying a degree to which the calculated gradient contributes to the output of the trained meta model 220. The gradient mask 203 may represent information for removing or maintaining the gradient according to the degree to which the gradient contributes to the output of the trained meta model 220. For example, the gradient mask 203 may have a vector value for removing a gradient contributing to the output of the trained meta model 220 by a low degree, and a vector value for maintaining a gradient contributing to the output of the trained meta model 220 by a high degree. The degree to which the weight contributes to the output of the meta model 220 may increase as the gradient according to the weight increases.

The image processing apparatus 100 may load a pre-trained meta model from the server 1000, and may load a gradient mask 203. The image processing apparatus 100 may obtain the meta model 230 from the server 1000. The image processing apparatus 100 may adjust the weight of the neural network by training the obtained meta model 230 using training data corresponding to an actual input image. The image processing apparatus 100 may obtain the input image 110, and may generate a low-resolution image 250 by deteriorating the input image 110 according to the degree of deterioration of the input image 110. The meta model 230 may be adapted to the input image 110 by being repeatedly trained a predetermined number of times using training data including the low-resolution image 250 and the input image 110.

According to embodiments, when the meta model 230 may be trained using the input image 110, this may be referred to as the meta model 230 being adapted to the input image 110. For example, the meta model 230 trained using training data corresponding to an input image may be referred to as an "adapted meta model", an "adaptive meta model", or a "transfer model". The image processing apparatus 100 may prune the gradient calculated from the meta model 230 using the gradient mask 203. For example, the image processing apparatus 100 may remove a gradient contributing to the output of the meta model 230 by a low degree, and may maintain a gradient contributing to the output of the meta model 220 by a high degree. Because the image processing apparatus 100 may adjust the weight of the meta model 230, based on the pruned gradient, the amount of computation may be reduced.

The image processing apparatus 100 may train the meta model 230, based on integer data. For example, because the image processing apparatus 100 performs a convolution operation using an integer weight, the amount of computation may be reduced, and a quantization error may be minimized.

The image processing apparatus 100 may generate an output image 120 by improving the resolution of the input image 110 using the meta model 230 adaptive to the input image 110.

FIG. 3 is a block diagram of an internal structure of the image processing apparatus 100 according to an embodiment of the disclosure.

Referring to FIG. 3, the image processing apparatus 100 according to an embodiment of the disclosure may include an image quality determiner 310, a model adaptation unit 320, and an image quality processor 340. The image quality determiner 310, the model adaptation unit 320, a gradient pruning unit 322, and the image quality processor 340 may be implemented as at least one processor. The image quality determiner 310, the model adaptation unit 320, the gradient pruning unit 322, and the image quality processor 340 may operate according to at least one instruction stored in a memory.

According to an embodiment of the disclosure, the image quality determiner 310 may analyze or evaluate the image quality or quality of the input image 110. The image quality of an image may indicate the degree of deterioration of the image. After an image is obtained using the image processing apparatus 100, information may be lost and deteriorated while the image undergoes processes such as processing, compression, storage, transmission, and restoration. The image quality determiner 310 may evaluate or determine at least one of the compression deterioration , the degree of compression, the degree of blur, the degree of noise, or the resolution of the input image 110. According to an embodiment of the disclosure, the image quality determiner 310 may provide or indicate the image quality of the input image 110 to the model adaptation unit 320.

According to an embodiment of the disclosure, the model adaptation unit 320 may generate training data corresponding to the input image 110. The training data may include an input image 110 corresponding to a high-resolution image (e.g., an answer image or a label) and a low-resolution image corresponding to the image quality of the input image 110. For example, the model adaptation unit 320 may obtain the low-resolution image by degrading the input image 110 to have a degree of deterioration relative to the image quality of the input image 110. For example, the image quality determiner 310 may obtain the low-resolution image by causing the input image to have at least one of a compressed image quality, a blurred image quality, a reduced resolution, and an increased noise. The low-resolution image may be an image in which the input image 110 has been further degraded to the same degree of degradation that occurred while the input image 110 is undergoes such as processing, compression, storage, transmission, and restoration by the image processing apparatus 100.

According to an embodiment of the disclosure, the model adaptation unit 320 may obtain a meta model. For example, the model adaptation unit 320 may obtain a meta model corresponding to the image quality of the input image 110. However, embodiments are not limited thereto. In embodiments, the meta model may correspond to the meta model 230 of FIG. 2.

According to an embodiment of the disclosure, the model adaptation unit 320 may train the meta model using training data including the input image 110 and the low-resolution image. According to an embodiment of the disclosure, the model adaptation unit 320 may train the meta model 230 so that the meta model may perform image quality processing in accordance with the input image 110.

According to an embodiment of the disclosure, the model adaptation unit 320 may obtain a result image (which may be referred to as a predicted image) output by the meta model 230 by inputting the low-resolution image included in the training data to the meta model 230 through a forward propagation process.

According to an embodiment of the disclosure, the model adaptation unit 320 may compare the result image with the input image 110 included in the training data, and may adjust a parameter of the meta model 230 to minimize a difference between the two images. The parameter may include a weight. The model adaptation unit 320 may calculate a loss, which may be a difference between the output image 120 and the input image 110. The model adaptation unit 320 may calculate a gradient of the meta model 230 by partially differentiating the loss using the parameter of the meta model 230. The gradient may have a value for adjusting the parameter of a neural network in a direction of minimizing the loss (or a learning error) of the neural network according to a gradient descent algorithm.

According to an embodiment of the disclosure, the gradient may be expressed as Equation 1.

$$g = \frac{\partial J}{\partial w} \qquad \text{Equation 1}$$

In Equation 1 above, g may denote the gradient of the meta model, J may denote the loss of the meta model, and w may denote the weights of the meta model. The gradient may be a partial differential value of the weights of the meta model for the loss. For example, the direction of the gradient may determine the direction of movement of a weight for minimizing the loss, and the size of the gradient may determine the degree of update of the weight.

According to an embodiment of the disclosure, the model adaptation unit 320 may repeatedly update the parameter until the loss is minimized or reduced to be below a threshold. The model adaptation unit 320 may optimize the parameter of the meta model. According to an embodiment of the disclosure, the parameter of the meta model that is updated by the model adaptation unit 320 may be expressed according to Equation 2 below.

$$w_{i+1} \leftarrow w_i - lr * \frac{\partial J}{\partial w_i} \qquad \text{Equation 2}$$

In Equation 2, $w_{i+1}$ may denote an updated weight of the meta model, $w_i$ indicates a current weight of the meta model, lr may denote a learning rate of the meta model, and $\frac{\partial J}{\partial w_i}$ may denote a gradient of the meta model (corresponding to Equation 1). The weight of the meta model may be updated by reflecting the gradient in the current weight of the meta model.

According to an embodiment of the disclosure, the meta model 230 may include a convolutional neural network (CNN) including a plurality of convolutional layers. The CNN may perform a convolution operation using the plurality of convolutional layers. Each of the plurality of convolutional layers of the CNN may include one or more filters, each of which may have a weight. The filter may be referred to as a weight filter.

According to an embodiment of the disclosure, the model adaptation unit 320 may update the calculated gradient to the weight of the meta model. The gradient may be used to update the weight of the filter used in each convolutional layer of the meta model 230.

According to an embodiment of the disclosure, the model adaptation unit 320 may calculate a number of gradients corresponding to the number of filters used in each convolutional layer. For example, the gradient may include a plurality of gradients corresponding to a plurality of filters used in each convolutional layer. Each of the plurality of gradients may be used to update respective weights of the plurality of filters.

According to an embodiment of the disclosure, the model adaptation unit 320 may remove at least one gradient from among the plurality of gradients by applying a gradient mask with gradient pruning information to the plurality of gradients using the gradient pruning unit 322. At least one gradient among the plurality of gradients may be removed using the gradient mask, and the remaining gradients may be maintained without being removed. The gradient mask may include information for masking, removing, or pruning the plurality of gradients.

According to an embodiment of the disclosure, the gradient mask may be a binary mask having a binary value indicating whether to remove the gradient used to update the weights of the meta model. For example, the gradient mask may have a vector value of "0" corresponding to a gradient that is to be removed, and may have a vector value of "1" corresponding to a gradient that is to be maintained. The gradient mask may be stored in an external database or in an internal memory of the image processing apparatus 100.

According to an embodiment of the disclosure, the model adaptation unit 320 may train the meta model 230 by removing some gradients from among the plurality of gradients based on the gradient mask and updating the parameter of the meta model 230 with the remaining gradients. According to an embodiment of the disclosure, the model adaptation unit 320 may omit a process of updating the parameter of the meta model 230 corresponding to the removed gradient. The parameter of the meta model 230 may be updated based on a gradient remaining without being removed based on the gradient mask. In the disclosure, gradient pruning may omit or remove a portion of the back propagation process, so the gradient pruning may also be referred to as backward pruning.

The weight that is updated by the model adaptation unit 320 according to an embodiment of the disclosure may be expressed according to Equation 3 below

$$w^{(l)} \leftarrow w^{(l)} - lr * m^{(l)} g^{(l)} \qquad \text{Equation 3}$$

In Equation 3, $w^{(l)}$ may denote a weight corresponding to each filter for an l-th convolutional layer, lr may denote a learning rate, $m^{(l)}$ may denote a gradient mask for the l-th convolutional layer, and $g^{(l)}$ may denote a gradient for the l-th convolutional layer. The gradient mask $m^{(l)}$ may include information for removing the gradient used to update each filter.

According to an embodiment of the disclosure, a vector value of the gradient mask $m^{(l)}$ may be multiplied by a plurality of gradients $g^{(l)}$, and $m^{(l)}g^{(l)}$ may represent the gradient remaining after removal based on the gradient mask $m^{(l)}$. The weight $w^{(l)}$ of the filter for the l-th convolutional layer may be updated based on the gradient $m^{(l)}g^{(l)}$ remaining without being removed based on the gradient mask $m^{(l)}$.

According to an embodiment of the disclosure, the plurality of gradients $g^{(l)}$ may be expressed by $k_x \times k_y \times c_{out}$, where $k_x$ may denote a width (or the number of columns of the gradient matrix) of gradient data, $k_y$ may denote a height (or the number of rows of the gradient matrix) of the gradient data, and $c_{out}$ may denote the number of the plurality of gradients $g^{(l)}$ (or the number of gradient filters). According to an embodiment of the disclosure, a size of the gradient mask $m^{(l)}$ (or the number of rows of a gradient mask matrix) may be denoted as $C_{out}$.

A filter for the l-th convolutional layer may be expressed as $k_x \times k_y \times c_{out}$, where $c_{out}$ may denote the number of output channels (or the number of feature map channels). The number of input channels is illustrated as being one ("1") for convenience, but embodiments are not limited thereto.

According to an embodiment of the disclosure, the size $C_{out}$ of the gradient mask $m^{(l)}$ may be equal to the number $C_{out}$ of the gradient $g^{(l)}$.

According to an embodiment of the disclosure, the model adaptation unit 320 may remove at least one gradient for updating at least one filter from among the plurality of filters through the gradient mask, and may maintain the remaining gradients for updating the remaining filters among the plurality of filters. The model adaptation unit 320 may train the meta model by updating the remaining filters based on the remaining gradients.

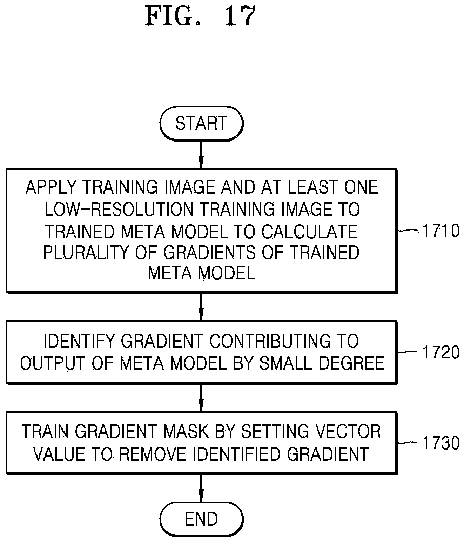

According to an embodiment of the disclosure, the gradient mask may include information for maintaining a gradient having a high contribution to improving high-resolution performance of the meta model. For example, a gradient having a large gradient value may have a high contribution to improving high-resolution performance. For example, the gradient having a large gradient value may have a large degree of weight updating, so the weight of the meta model may be optimized quickly. For example, the gradient mask may have information for maintaining a gradient with a large gradient value and removing a gradient with a small gradient value. The gradient mask may include information for removing gradients corresponding to n minimum values among values obtained by quantifying the plurality of gradients (where n is a natural number). In some embodiments, for example, the gradient mask may include information for removing gradients corresponding to values equal to or less than a threshold value among the values obtained by quantifying the plurality of gradients. For example, the values of the plurality of gradients may be obtained by summing data existing in a gradient data matrix for each gradient filter. The plurality of gradients may correspond to a plurality of gradient filters. An example of a detailed process of generating the gradient mask is described below with reference to FIGS. 17 through 18B.

According to an embodiment of the disclosure, the image processing apparatus 100 may train the meta model at high speed using gradient pruning. The image processing apparatus 100 may reduce the amount of computation in the back propagation process and reduce the amount of memory usage, by performing training using gradient pruning. The image processing apparatus 100 may obtain an adaptive meta model for the input image 110 using gradient pruning.

According to an embodiment of the disclosure, the image quality processor 330 may use the meta model trained by the model adaptation unit 320. The image quality processor 330 may process the image quality of the input image 110 using the updated meta model. The image quality processor 330 may obtain the high-resolution image by processing the image quality of the input image 110 using the meta model adapted to the input image 110.

According to an embodiment of the disclosure, the image processing apparatus 100 may train a neural network model, based on an integer operation. The image processing apparatus 100 may reduce the amount of computation compared to an FP operation by performing the training based on an INT operation, and may minimize a quantization error. An example of this is described in detail below with reference to FIGS. 10 through 13.

Although the image quality determiner 310, the model adaptation unit 320, the gradient pruning unit 322, and the image quality processor 340 are illustrated as separate elements or components in FIG. 3, embodiments are not limited thereto. For example, in some embodiments one or more of the image quality determiner 310, the model adaptation unit 320, the gradient pruning unit 322, and the image quality processor 340 may be combined, for example by being implemented through one processor. In this case, one or more of the image quality determiner 310, the model adaptation unit 320, the gradient pruning unit 322, and the image quality processor 340 may be implemented as a dedicated processor, or may be implemented using a combination of software and a general-purpose processor such as an application processor (AP), a central processing unit (CPU), or a graphics processing unit (GPU). The dedicated processor may include a memory for implementing an embodiment of the disclosure or a memory processing unit for using an external memory. As another example, the image quality determiner 310, the model adaptation unit 320, the gradient pruning unit 322, and the image quality processor 340 may be configured as a plurality of processors.

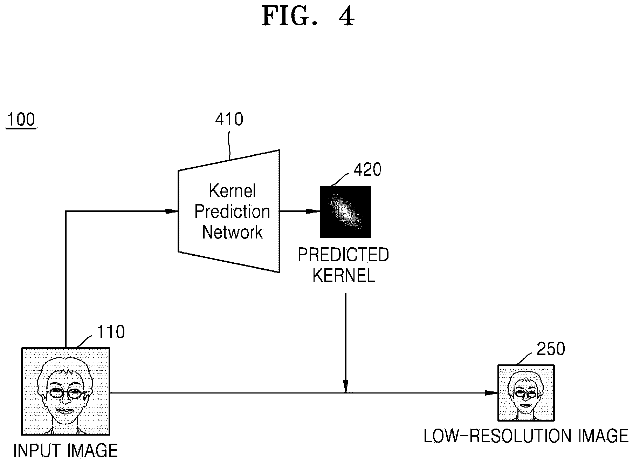

FIG. 4 is a diagram for explaining an operation, performed by an image processing apparatus according to an embodiment of the disclosure, of determining the image quality of an input image. An operation of FIG. 4 may be performed using the image quality determiner 310 of FIG. 3.

Referring to FIG. 4, the image processing apparatus 100 according to an embodiment of the disclosure may determine the image quality of the input image 110, and may generate the low-resolution image 250 based on the input image 110.

According to an embodiment of the disclosure, the image processing apparatus 100 may include a kernel prediction network 410, which may be a neural network trained to evaluate the image quality of the input image 110. According to an embodiment of the disclosure, the image processing apparatus 100 may evaluate the image quality of the input image 110 using the kernel prediction network 410. The kernel prediction network 410 may analyze or evaluate the image quality of the input image 110 using a neural network trained to analyze or evaluate the image quality of the input image 110. For example, the neural network may be a neural network trained to evaluate the quality of an image or video using an Image Quality Assessment (IQA) technology and/or a Video Quality Assessment (VQA) technology.

According to an embodiment of the disclosure, the kernel prediction network 410 may output a predicted kernel 420. For example, the kernel prediction network 410 may analyze an image and determine the degree of deterioration that occurs while the image is undergoing processes such as processing, compression, storage, transmission, and restoration. For example, the predicted kernel 420 may have information about at least one of a compressed image quality, a blurred image quality, a resolution, or noise of the input image 110.

According to an embodiment of the disclosure, the image processing apparatus 100 may obtain the low-resolution image 250, based on the image quality of the input image 110 obtained by analyzing the input image 110. For example, the image processing apparatus 100 may obtain the low-resolution image 250 by applying the predicted kernel 420 to the input image 110 using the kernel prediction network 410. For example, the image processing apparatus 100 may obtain the low-resolution image 250 by performing processing to add at least one of a compressed image quality, a blurred image quality, a decreased resolution, or an increased noise to the input image 110.

According to an embodiment of the disclosure, the image processing apparatus 100 may generate training data including the input image 110 and the low-resolution image 250. In the example illustrated in FIG. 4, because an image received from the image processing apparatus 100 through the kernel prediction network 410 may be converted from full high definition (HD) (FHD) to ultra HD (UHD), the image processing apparatus 100 may determine that the resolution has been reduced by two times. The image processing apparatus 100 may obtain the input image 110, and generate a low-resolution image 250 by deteriorating the input image 110 according to the degree of deterioration of the input image 110.

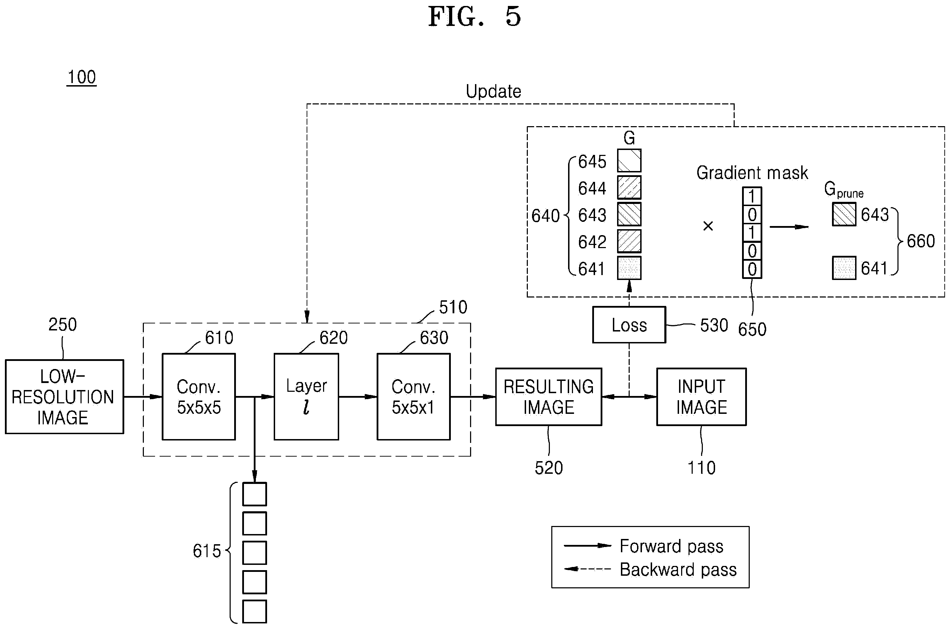

FIG. 5 is a diagram for explaining an operation, performed by an image processing apparatus according to an embodiment of the disclosure, of adapting a meta model in correspondence with an input image. An operation of FIG. 5 may be performed using the model adaptation unit 320 of FIG. 3.

Referring to FIG. 5, the image processing apparatus 100 may obtain a neural network model 510. The neural network model 510 may correspond to the meta model 230 of FIG. 2.

The image processing apparatus 100 according to an embodiment of the disclosure may train the neural network model 510 based on the training data including the input image 110 and the low-resolution image 250 having an image quality processed corresponding to the input image 110.

The neural network model 510 according to an embodiment of the disclosure may be a convolutional neural network (CNN) having a plurality of convolutional layers. Each of the plurality of convolutional layers may include one or more filters, each of which may have a weight value. For example, the image processing apparatus 100 may output a resulting image 520 by performing a convolution operation between the low-resolution image 250 and a filter used in the convolutional layers of the neural network model 510. For example, the convolutional layers may include at least one convolutional layer, such as a first convolutional layer 610, a second convolutional layer 620, and a third convolutional layer 630.

The low-resolution image 250 may be input to the first convolutional layer 610. An indication 3X3X4 marked on the first convolutional layer 610 may indicate that convolution is performed on the low-resolution image 250, which is one input image, using five filters each having a 5 x 5 size. For example, because five filters may be used in the first convolutional layer 610, five feature maps 615 may be generated as a result of the convolution using five filters. The feature maps 615 output by the first convolutional layer 610 may be input to the second convolutional layer 620. The second convolutional layer 620 may correspond to an l-th convolutional layer. A feature map output by the second convolutional layer 620 may be input to the third convolutional layer 630. The third convolutional layer 630 may generate the resulting image 520, which may be one piece of output data, using one filter with a size of 5X5.

According to an embodiment of the disclosure, the neural network model 510 may further include an activation layer. For example, the activation layer may include a sigmoid function, a Tanh function, a Rectified Linear Unit (ReLU) function, etc. to provide non-linear characteristics to each feature map.

The image processing apparatus 100 may calculate a gradient 640 for minimizing a loss 530, which may be for example a difference between the resulting image 520 and the input image 110, through a back propagation process. For example, a direction of the gradient 640 may represent the direction of movement of the weight of filter used in the convolutional layers to minimize the loss 530, and the size of the gradient 640 may represent the degree of update of the weight of the filter. The image processing apparatus 100 may update the parameters of the neural network model 510 in a direction where the gradient of the calculated loss 530 decreases through a gradient descent method, and may repeat the updating until the loss 530 becomes minimum.

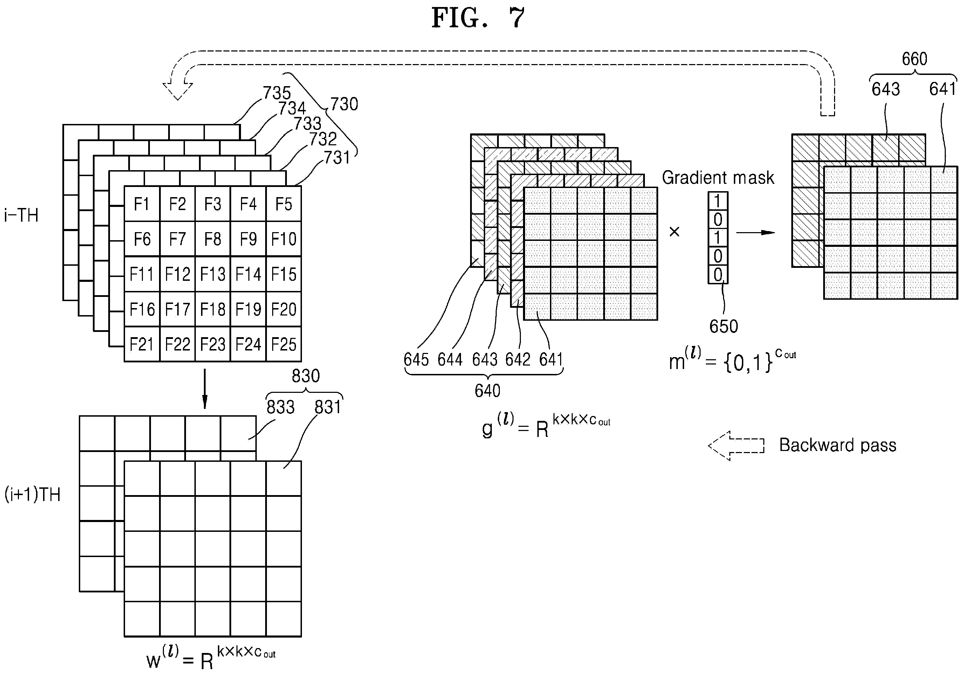

The gradient may include a plurality of gradients corresponding to a plurality of filters used in each convolutional layer. For example, the gradient 640 may include a plurality of gradients, for example a first gradient 641, a second gradient 642, a third gradient 643, a fourth gradient 644, and a fifth gradient 645 as shown in FIG. 5 and FIG. 7. The plurality of gradients (e.g., the first to fifth gradients 641, 642, 643, 644, and 645) may respectively correspond to five filters used in the first convolutional layer 610. For example, the five filters may be a plurality of filters, for example a first filter 731, a second filter 732, a third filter 733, a fourth filter 734, and a fifth filter 735 as shown in FIG. 7.

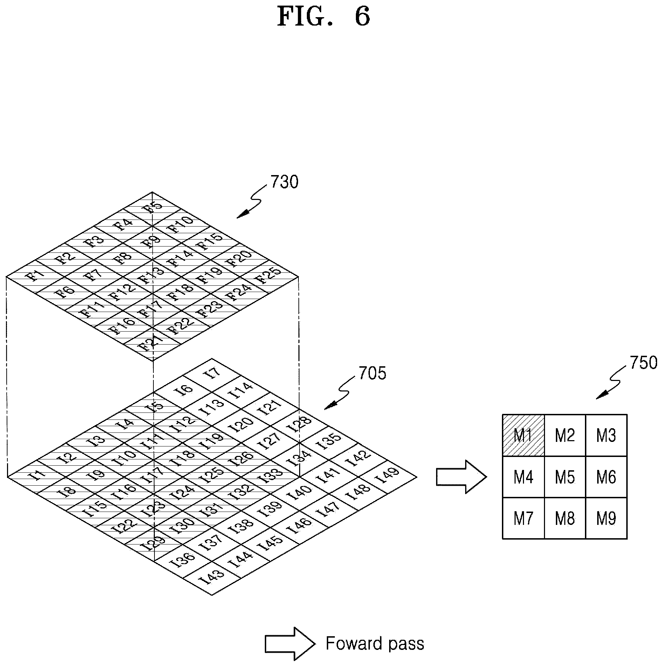

A convolution operation process in a convolutional layer according to an embodiment of the disclosure will be further described with reference to FIGS. 6 and 7. FIG. 6 is a view for describing a convolution operation performed in a convolutional layer of a meta model according to an embodiment of the disclosure. FIG. 7 is a view for describing a relationship between a filter and a gradient in the convolutional layer of the meta model according to an embodiment of the disclosure.

A single feature map 750 may be generated using multiplication and addition between parameters of a filter 730 having a size of 5 X 5 used in the first convolutional layer 610 and sample values in input data 705 corresponding to the parameters. Because five filters may be used in the first convolutional layer 610, five feature maps may be generated through a convolution operation process using the five filters.

As shown in FIG. 6, the input data 705 may include samples I1 through I49 (which may also be referred to as pixels) of the input data 705, and the filter 730 may have a filter kernel including weights F1 through F25 . In addition, the feature map 750 may include samples M1 through M9. For example, the feature map 750 may correspond to the feature map 615.

In the convolution operation process, multiplication between sample values of the samples I1, I2, I3, I4, I5, I8, I9, I10, I11, I12, I15, I16, I17, I18, I19, I22, I23, I24, I25, I26, I29, I30, I31, I32, I33 of the input data 705 and weights F1 through F25 of the filter 730 may be respectively performed, and a value of a combination (for example, addition) of resulting values of the multiplications may be allocated as the value of the sample M1 of the feature map 750. A stride of the convolution operation may be one ("1"), but embodiments are not limited thereto.

While the filter 730 moves according to the stride until reaching a last sample of the input data 705, the convolution operation between the sample values within the input data 705 and the samples of the filter 730 may be performed, and thus the feature map 750 having a certain size may be obtained. For example, the feature map 750 of a 5 X 5 size may be used. A loss function may be obtained based on a difference between the feature map 750 and the resulting low-resolution image 250.

According to embodiments, values of weights of the neural network model 510, for example, weights of the filter 730 used in the convolutional layers of the neural network model 510 (e.g., the weights F1 through F25 of the filter 730), may be optimized through training of the neural network model 510.

The convolutional layers included in the neural network model 510 may be processed according to the convolution operation process described above with reference to FIG. 5, but the convolution operation process described above with reference to FIG. 5 is only an example. Embodiments are not limited thereto.

Referring to FIG. 7, the plurality of gradients (e.g., the first to fifth gradients 641, 642, 643, 644, and 645) for updating the plurality of filters (e.g., the first to fifth filters 731, 732, 733, 734, and 735) may be calculated in the first convolutional layer 610. For example, the plurality of gradients (e.g., the first to fifth gradients 641, 642, 643, 644, and 645), may respectively correspond to loss functions for the weights of the plurality of filters (e.g., the first to fifth filters 731, 732, 733, 734, and 735). For example, the first gradient 641 may be the gradient of the loss function with respect to the weight of the first filter 731. For example, the second gradient 642 may be the gradient of the loss function with respect to the weight of the second filter 732. For example, the third gradient 643 may be the gradient of the loss function with respect to the weight of the third filter 733. For example, the fourth gradient 644 may be the gradient of the loss function with respect to the weight of the fourth filter 734. For example, the fifth gradient 645 may be the gradient of the loss function with respect to the weight of the fifth filter 735.

According to an embodiment of the disclosure, the plurality of gradients (e.g., the first to fifth gradients 641, 642, 643, 644, and 645) may be expressed as $k \times k \times c_{out}$. The plurality of filters (e.g., the first to fifth filters 731, 732, 733, 734, and 735) may be expressed as $k \times k \times c_{out}$. Respective sizes of the plurality of gradients (e.g., the first to fifth gradients 641, 642, 643, 644, and 645) may correspond to sizes of the plurality of filters (e.g., the first to fifth filters 731, 732, 733, 734, and 735). For example each gradient or each filter may have a size. The number of gradients (e.g., the first to fifth gradients 641, 642, 643, 644, and 645) may be equal to the number of the plurality of filters (e.g., the first to fifth filters 731, 732, 733, 734, and 735). For example, the number of gradients may be expressed as $c_{out}$ and the number of filters may be expressed as $c_{out}$ For example, because five filters each having a 5x5 size may be used in the first convolutional layer 610, five gradients each having a 5x5 size for updating the five filters may be calculated.

The image processing apparatus 100 may apply a gradient mask 650 having gradient pruning information to the calculated gradient 640. The gradient mask 650 may include gradient pruning information for pruning a plurality of gradients. The gradient mask 650 is illustrated in FIG. 5 and FIG. 7 as being expressed as a column vector, but embodiments are not limited thereto. The gradient mask 650 may have a vector value of "0" corresponding to the gradients 642, 644, and 645 to be removed, and may have a vector value of "1" corresponding to the gradients 641 and 643 to be maintained. The gradients 642, 644, and 645 to be removed may be gradients having a low contribution to improving the performance of the neural network model 510, and the gradients 641 and 643 to be maintained may be gradients having a high contribution to improving the performance of the neural network model 510.

The size (or number of rows) of the gradient mask 650 may be equal to the number of filters of the neural network model 510, and may be equal to the number of gradients 640. For example, the number of gradient masks 650 may be expressed as $c_{out}$. For example, the gradient mask 650 may include five vector values regarding whether to remove the plurality of gradients (e.g., the first to fifth gradients 641, 642, 643, 644, and 645) respectively corresponding to the plurality of filters (e.g., the first to fifth filters 731, 732, 733, 734, and 735), respectively.

Based on the gradient mask 650, the image processing apparatus 100 may remove the second gradient 642, the fourth gradient 644, and the fifth gradient 645 from the plurality of gradients (e.g., the first to fifth gradients 641, 642, 643, 644, and 645), and maintain the first gradient 641 and the third gradient 643 from among the plurality of gradients (e.g., the first to fifth gradients 641, 642, 643, 644, and 645). For example, the second gradient 642, the fourth gradient 644, and the fifth gradient 645 among the plurality of gradients (e.g., the first to fifth gradients 641, 642, 642, 644, 644, and 645) may be removed, and the first gradient 641 and the third gradient 643 among the plurality of gradients (e.g., the first to fifth gradients 641, 642, 643, 644, and 645) may be maintained. The first gradient 641 and the third gradient 643 may be included in a pruned gradient 660.

The image processing apparatus 100 may partially update the weights of the neural network model 510, based on the pruned gradient 660. For example, the image processing apparatus 100 may update the first filter 731 and the third filter 733, and may not update the second filter 732, the fourth filter 734, and the fifth filter 735. Because the update process of the second filter 732, fourth filter 734, and fifth filter 735 may be omitted, the back propagation process may be simplified.

The image processing apparatus 100 may obtain a first filter 831 updated based on the first gradient 641, and may obtain a third filter 833 updated based on the third gradient 643. The first filter 831 and the third filter 833 may be repeatedly updated through iteration, and for example may be updated until the weight of the first filter 831 and the weight of the third filter 833 are optimized.

Referring again to FIG. 5, the image processing apparatus 100 may preserve a gradient contributing to improving the high-resolution performance of the neural network model 510 and may repeatedly update only the weight of a filter corresponding to the preserved gradient, and thus may train the neural network model 510. According to an embodiment of the disclosure, the image processing apparatus 100 may quickly train the neural network model 510 adaptive to the input image 110 using gradient pruning, and the amount of computation in the back propagation process of updating a weight may be reduced through a gradient, leading to a reduction of the amount of memory usage.

The convolutional layers of the neural network model 510 are not limited to the first convolutional layer 610, the second convolutional layer 620, and the third convolutional layer 630 shown in FIG. 5. For example, the neural network model 510 may include L convolutional layers. Each of the first convolutional layer 610, the second convolutional layer 620, and the third convolutional layer 630 may be referred to as the l-th convolutional layer (where L and l are natural numbers). The plurality of filters may refer to filters within the l-th convolutional layer.

In the example described above, gradient descent is described as an algorithm for training the neural network model 510, but embodiments are not limited thereto. The image processing apparatus 100 may train the neural network model 510 using any training algorithms. The image processing apparatus 100 may selectively apply, for example, hyperparameters (e.g., a learning rate, a batch size, and termination conditions) and optimization algorithms (e.g., stochastic gradient descent (SGD), Adam, and Adamp sec) according to system limitations, such as a memory, a processor, an operator, and power.

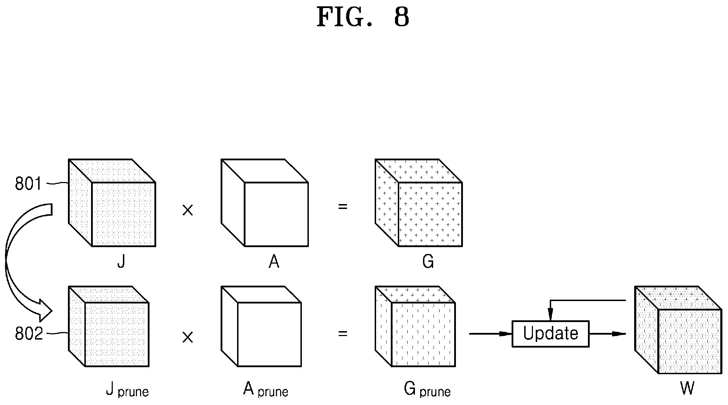

FIG. 8 is a diagram for explaining a result of gradient pruning according to an embodiment of the disclosure.

Referring to FIG. 8, in 801, J may denote a loss function, A may denote activation, and G may denote a gradient. The activation may be an intermediate product that is operated to calculate the gradient according to the chain rule of back propagation. The loss function, the activation, and the gradient may each be expressed as a convolution tensor, and the convolution tensor may refer to a matrix expanded to a high dimension to which a convolution operation is applied.

In 802, $J_{prune}$ may denote a pruned loss function, $A_{prune}$ may denote pruned activation, and $G_{prune}$ may denote a pruned gradient. W may denote a weight updated based on the pruned gradient. Because the image processing apparatus 100 may not use a gradient removed by a gradient mask, a process of performing an operation on a portion of the activation used to calculate the gradient may be omitted. Accordingly, the amount of memory for storing the activation, which is an intermediate product, may be reduced. Because the image processing apparatus 100 may not use the gradient removed by the gradient mask, a process of performing an operation on a portion of the loss function used to calculate the gradient may be omitted. Accordingly, the amount of computation for calculating the loss function may be reduced.

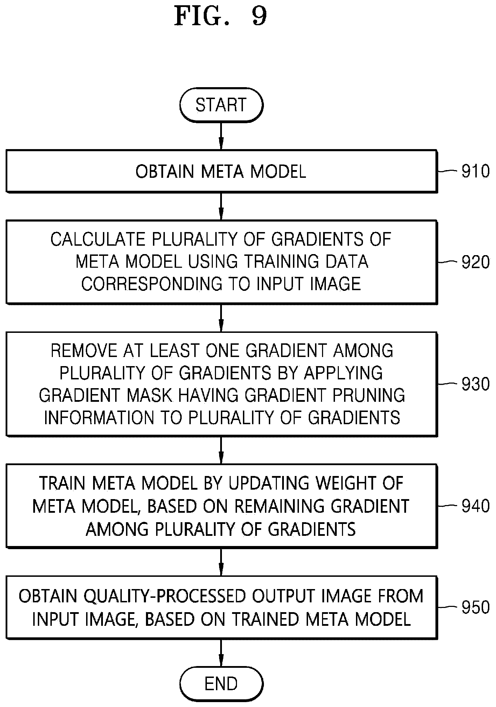

FIG. 9 is a flowchart of an operation method of the image processing apparatus 100 according to an embodiment of the disclosure.

At operation 910, the image processing apparatus 100 according to an embodiment of the disclosure may obtain the meta model. For example, the image processing apparatus 100 may obtain the meta model corresponding to the image quality of the input image 110. However, embodiments are not limited thereto. The meta model may correspond to the meta model 230 of FIG. 2 or the neural network model 510 of FIG. 5.

At operation 920, the image processing apparatus 100 according to an embodiment of the disclosure may calculate the plurality of gradients of the meta model using the training data corresponding to the input image 110.

The image processing apparatus 100 according to an embodiment of the disclosure may train the meta model using the training data including the input image 110 and the low-resolution image degraded from the input image 110. The meta model may perform a convolution operation between the low-resolution image and the filters used in the convolutional layers of the meta model to thereby output a feature map of a resulting image. Each of the convolutional layer may have one or more filters, each of which may have a weight.

The image processing apparatus 100 may obtain a resulting image output by the meta model 230, by inputting the low-resolution image included in the training data to the meta model 230. The image processing apparatus 100 may compare the resulting image with the input image 110 to calculate a loss, which may be a difference between the resulting image and the input image 110. The image processing apparatus 100 may calculate the gradient of the meta model so that the loss is minimized. The gradient may be expressed according to Equation 1 above. The gradient may include a plurality of gradients obtained by partial differentiation of the loss function with each of the weights of the neural network.

The image processing apparatus 100 may calculate the plurality of gradients corresponding to the plurality of filters, respectively, within each of the convolutional layers. The plurality of gradients may be used to update respective weights of the plurality of filters used in each of the convolutional layers. The image processing apparatus 100 may optimize the weights of a plurality of filters used in the convolutional layers of the meta model.

The image processing apparatus 100 may calculate a number of gradients corresponding to the number of filters used in the convolutional layers. The image processing apparatus 100 may calculate a plurality of gradients capable of updating the plurality of filters, respectively. According to an embodiment of the disclosure, the number of filters within the l-th convolutional layer may be equal to the number of gradients for the l-th convolutional layer.

According to an embodiment of the disclosure, the image processing apparatus 100 may perform gradient pruning at operation 930, and then may update the respective weights of the plurality of filters, based on the remaining gradients.

At operation 930, the image processing apparatus 100 according to an embodiment of the disclosure may remove at least one gradient from among the plurality of gradients by applying the gradient mask having gradient pruning information to the plurality of gradients. The image processing apparatus 100 according to an embodiment of the disclosure may preserve the remaining gradients among the plurality of gradients without removing the remaining gradients.

According to an embodiment of the disclosure, the gradient mask may include gradient pruning information for masking, removing, or pruning the plurality of gradients. For example, the gradient pruning information may include information regarding whether to remove or maintain any one filter among the plurality of filters within each convolutional layer.

The image processing apparatus 100 according to an embodiment of the disclosure may remove at least one gradient corresponding to at least one filter among the plurality of filters and may maintain the remaining gradients corresponding to the remaining filters among the plurality of filters, through the gradient mask. Accordingly, the image processing apparatus 100 may update the weights of the remaining filters corresponding to the remaining gradients without updating the weights of the at least one filter corresponding to the at least one removed gradient.

According to an embodiment of the disclosure, the gradient mask 650 may have a vector value for removing a gradient having low contribution to improving high-resolution performance among the plurality of filters within the meta model, and a vector value for maintaining a gradient having high contribution among the plurality of filters. For example, the gradient mask may have a vector value of "0" corresponding to a gradient that is to be removed from among the plurality of gradients, and may have a vector value of "1" corresponding to a gradient that is to be maintained. For example, a gradient with a large gradient value may have a high contribution to improving high-resolution performance.

According to an embodiment of the disclosure, the size of the gradient mask for the l-th convolutional layer may be equal to the number of gradients for respectively updating the plurality of filters within the l-th convolutional layer.

At operation 940, the image processing apparatus 100 according to an embodiment of the disclosure may train the meta model by updating the weight of the meta model, based on the remaining gradient among the plurality of gradients.

According to an embodiment of the disclosure, the image processing apparatus 100 may obtain a pruned gradient through the gradient mask. The pruned gradient may include the remaining gradients excluding the gradients removed through the gradient mask. The image processing apparatus 100 may update the weights of the remaining filters corresponding to the remaining gradients maintained by the gradient mask. The image processing apparatus 100 may train the meta model by updating the weights of filters, based on the remaining gradients. This has been explained above with reference to Equation 3.

At operation 950, the image processing apparatus 100 according to an embodiment of the disclosure may obtain a quality-processed output image from the input image, based on the trained meta model.

The image processing apparatus 100 according to an embodiment of the disclosure may process the image quality of the input image 110 using the updated meta model. The image processing apparatus 100 may generate the output image 120 of high resolution by applying the input image 110 using the meta model adaptive to the input image 110.

According to an embodiment of the disclosure, the image processing apparatus 100 may continue the forward propagation process without changes, but may reduce the amount of data of gradient needing to be calculated in the back propagation process and reduce the amount of calculation for updating weights. Because the image processing apparatus 100 may remove the gradient having a low contribution to improving the high-resolution performance of the meta model and may not update the weight of the filter corresponding to the removed gradient, the amount of computation in the back propagation process may be reduced, and the amount of memory usage may also be reduced.

According to an embodiment of the disclosure, the image processing apparatus 100 may preserve a gradient contributing to improving the high-resolution performance of the meta model and may repeatedly update only the weight of a filter corresponding to a preserved gradient, and thus may quickly perform image quality processing on the input image 110.

FIG. 10 is a block diagram of an internal structure of an image processing apparatus 100 according to an embodiment of the disclosure.

Referring to FIG. 10, the image processing apparatus 100 according to an embodiment of the disclosure may include an image quality determiner 310, a model adaptation unit 320-1, and an image quality processor 340. According to an embodiment of the disclosure, the model adaptation unit 320-1 may include a gradient pruning unit 322 and a quantizer 324. The image processing apparatus 100 shown in FIG. 10 may be similar to the image processing apparatus 100 shown in FIG. 3 except that the model adaptation unit 320-1 may further include the quantizer 324. The quantizer 324 may be implemented as at least one processor. The quantizer 324 may operate according to at least one instructions stored in a memory.

According to an embodiment of the disclosure, because the image processing apparatus 100 may train a meta model in real time inside the image processing apparatus 100, a significant amount of computation and computing resources may be used. For example, a training process of the meta model may involve a back propagation process that is repeated several hundreds to several tens of thousands of times. Because the image processing apparatus 100 may have limited computational resources and internal memory compared to a cloud server, the image processing apparatus 100 may train a neural network model, based on an INT operation.

According to an embodiment of the disclosure, the image processing apparatus 100 may perform a quantization process of converting FP data into INT data, in order to train the neural network model based on the INT operation.

According to an embodiment of the disclosure, the INT data may refer to data that does not a value below or after a decimal point, and may be expressed as a binary number such as an 8-bit integer, 16-bit integer, or 32-bit integer. According to an embodiment of the disclosure, the FP data may refer to a floating point having a value below or after a decimal point, and may be expressed as a binary number such as a 16-bit integer or 32-bit integer. According to an embodiment of the disclosure, the FP data may be converted to the INT data using a quantization process and may be expressed accordingly. For example, when one FP data is converted to 8-bit INT data, the one FP data may be expressed as two INT data, for example, a data value and a data scale.

According to an embodiment of the disclosure, the model adaptation unit 320-1 may calculate a gradient through a forward propagation process and a backpropagation process, and the calculated gradient may be FP data. The quantizer 324 may obtain the INT data via a quantization process with respect to an FP gradient. The model adaptation unit 320-1 may perform a convolution operation using the INT data obtained through the quantizer 324 and train the meta model. Accordingly, the image processing apparatus 100 may reduce the amount of computation by training the meta model associated with the image processing apparatus 100 using the INT data, compared to training the meta model with the FP data. According to embodiments, the meta model trained with the INT data may be referred to as an INT neural network model. Pieces of data of the meta model trained with the INT data may be expressed as INT data instead of FP data.

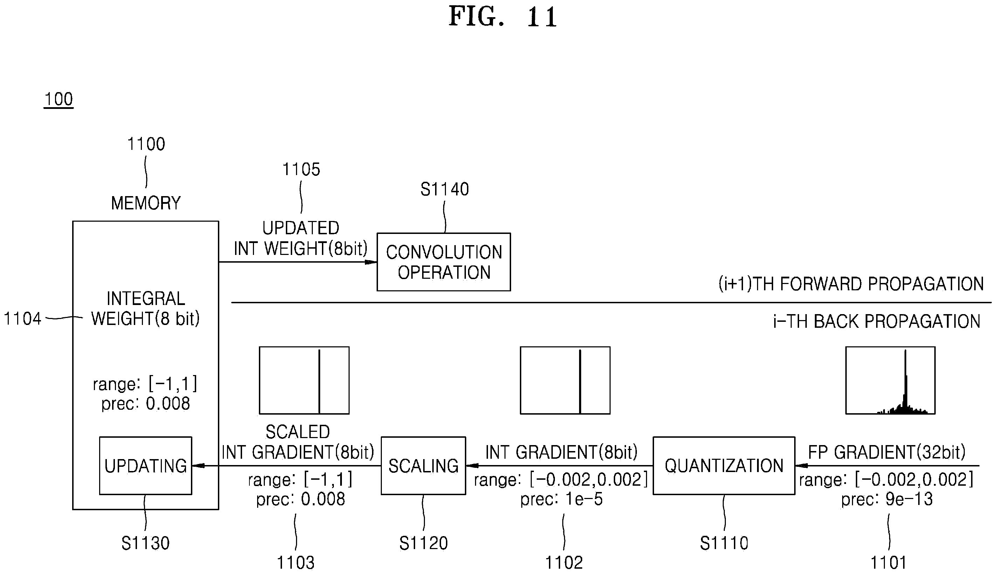

According to an embodiment of the disclosure, the memory of the image processing apparatus 100 may store INT weights (as shown for example in FIG. 11). The image processing apparatus 100 may quantize a calculated FP gradient into an INT gradient using the quantizer 324. The image processing apparatus 100 may update the quantized INT gradient to the INT weight stored in the memory. The image processing apparatus 100 may perform a convolution operation with respect to a next iteration using the updated INT weight. The image processing apparatus 100 according to an embodiment of the disclosure may train the meta model using the INT data obtained using the quantizer 324. Because the image processing apparatus 100 according to an embodiment of the disclosure may train the meta model using the INT weight, the amount of computation may be reduced.

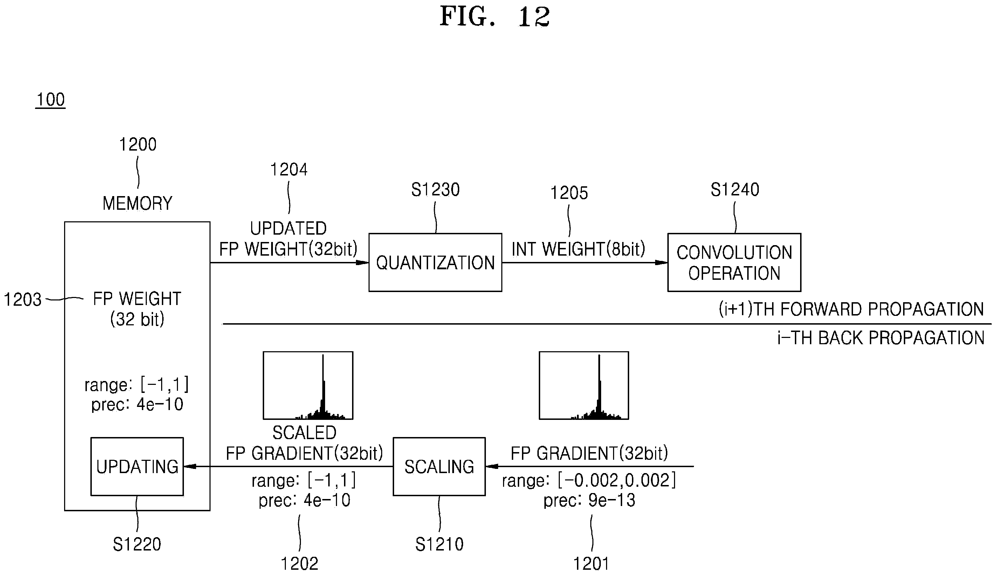

In some embodiments, according to an embodiment of the disclosure, the memory of the image processing apparatus 100 may store FP weights (as shown for example in FIG. 12). The image processing apparatus 100 may not quantize the calculated FP gradient using the quantizer 324, and may update the FP gradient to the FP weight. The image processing apparatus 100 may quantize the updated FP weight into an INT weight. The image processing apparatus 100 may perform a convolution operation with respect to a next iteration using the quantized INT weight. The image processing apparatus 100 according to an embodiment of the disclosure may train the meta model using the INT data obtained through the quantizer 324.

The quantizer 324 according to an embodiment of the disclosure may perform scaling on a gradient, as preprocessing for updating the gradient to a weight. For example, the quantizer 324 may scale the range of the gradient so that the range of the gradient may be similar to the range of the weight. The scaling may refer to an operation of adjusting the range of data.

According to an embodiment of the disclosure, when the INT weight is stored in the memory of the image processing apparatus 100, the image processing apparatus 100 may perform scaling with respect to the INT gradient, as preprocessing for updating the INT gradient to the INT weight (as shown for example in FIG. 11). According to an embodiment of the disclosure, because the INT weight may be stored in the memory of the image processing apparatus 100, a quantization process of converting the FP gradient into the INT gradient may be involved. In this case, the precision of the INT gradient converted from the FP gradient may decrease due to a quantization error. Accordingly, when the gradient range is scaled to correspond to the weight range, distribution distortion of gradient data may increase. According to an embodiment of the disclosure, the image processing apparatus 100 may update a weight using a gradient with increased data distribution distortion, which may result in distribution distortion of weight data. When the meta model is trained based on a weight having data distribution distortion, data distribution distortion and a quantization error may increase.

In contrast, according to an embodiment of the disclosure, when the FP weight is stored in the memory of the image processing apparatus 100, the image processing apparatus 100 may perform scaling with respect to the FP gradient, as preprocessing for updating the FP gradient to the FP weight (as shown for example in FIG. 12). According to an embodiment of the disclosure, because the FP weight may be stored in the memory of the image processing apparatus 100, a quantization process with respect to the FP gradient may be omitted. In this case, no quantization errors may exist, and the precision of the INT gradient may be maintained to be relatively high. Accordingly, when the gradient range is scaled to correspond to the weight range, distribution distortion of gradient data may be minimized. According to an embodiment of the disclosure, the image processing apparatus 100 may update a weight using a gradient having minimized data distribution distortion, and perform quantization with respect to the updated weight to thereby train the meta model. Accordingly, data distribution distortion and a quantization error of the image processing apparatus 100 may be minimized.

According to an embodiment of the disclosure, an operation method of the quantizer 324 when an INT weight is stored in the memory of the image processing apparatus 100 may be different from an operation method of the quantizer 324 when an FP weight is stored in the memory of the image processing apparatus 100. Examples of such operation methods are described below with reference to FIGS. 11 and 12, respectively.

FIG. 11 is a view for explaining a quantization operation of the image processing apparatus 100, according to an embodiment of the disclosure.

Referring to FIG. 11, the image processing apparatus 100 according to an embodiment of the disclosure may perform a quantization operation using the model adaptation unit 320-1.

According to an embodiment of the disclosure, a memory 1100 of the image processing apparatus 100 may store an INT weight 1104. For example, the INT weight 1104 may be INT data including eight bits (e.g., 8-bit INT data). The range of the INT weight 1104 may be [-1,1], and the precision thereof may be 0.008. However, the bits, range, and precision of the INT weight 1104 are not limited to the example of FIG. 11.

At operation S1110, the image processing apparatus 100 may quantize an FP gradient 1101 calculated using the image processing apparatus 100 into an INT gradient 1102.

The FP gradient 1101 may be FP data including thirty-two bits (e.g., 32-bit FP data). The range of the FP gradient 1101 may be [-0.002, 0.002], and the precision thereof may be 9e-13. However, the bits, range, and precision of the FP gradient 1101 are not limited to the example of FIG. 11.

The INT gradient 1102 may be INT data including eight bits. The range of the INT gradient 1102 may be [-0.002, 0.002], and the precision thereof may be 1e-5. However, the bits, range, and precision of the INT gradient 1102 are not limited to the example of FIG. 11.

As the INT gradient 1102 is quantized from the FP gradient 1101, the INT gradient 1102 may have lower precision than the FP gradient 1101. The range of the INT gradient 1102 may be the same as the range of the FP gradient 1101.

At operation S1120, the image processing apparatus 100 may perform scaling on the INT gradient 1102, as preprocessing for updating the INT gradient 1102 to the INT weight 1104. For example, the image processing apparatus 100 may adjust the range of the INT gradient 1102 so that the range of the INT gradient 1102 is the same as the range of the INT weight 1104. The scaling may refer to an operation of adjusting the range of data. For example, the scaling may include a min-max normalization method of scaling minimum and maximum ranges of the data to be zero ("0") and one ("1"), respectively, a normalization method of performing scaling so that all values are expressed between negative one ("-1") and one ("1"), and a standardization method of standardizing the data to have a normal distribution with a mean of zero ("0") and a variance of one ("1").

The image processing apparatus 100 may obtain a scaled INT gradient 1103 by scaling the range of the INT gradient 1102. For example, in FIG. 11, scaling is illustrated as a normalization method of performing scaling so that all values are expressed between negative one ("-1") and one ("1"). However, embodiments are not limited thereto.

The scaled INT gradient 1103 may be INT data including eight bits. The range of the scaled INT gradient 1103 may be [-1, 1], which may be similar to the range of the INT gradient 1104, and the precision thereof may be 0.008. However, the bits, range, and precision of the INT gradient 1102 are not limited to the example of FIG. 11.

According to an embodiment of the disclosure, in the process of performing scaling so that the range of the INT gradient 1102 is identical with the range of the INT weight 1104, when a difference between the two ranges is large, the precision of the INT gradient 1102 may decrease. For example, the scaled INT gradient 1103 may be significantly reduced in precision compared to a no-yet scaled INT gradient. Accordingly, a data distribution of the INT gradient may be distorted.

At operation S1130, the image processing apparatus 100 may update the INT gradient 1103 to the INT weight 1104 stored in the memory 1100. The image processing apparatus 100 may obtain an updated INT weight 1105, and may perform a convolution operation with respect to a next iteration (e.g., i+1) through the updated INT weight 1105.

At operation S1140, the image processing apparatus 100 may perform a convolution operation of a forward propagation process using the updated INT weight 1105. The image processing apparatus 100 may train the meta model with training data corresponding to an input image using the updated INT weight 1105. The image processing apparatus 100 may obtain the meta model based on an INT operation. Accordingly, the amount of computation of repetitive training of the meta model by the image processing apparatus 100 may decrease.

However, as described above with reference to operation S1120, when a difference between the range of the INT gradient 1102 and the range of the INT weight 1104 is large, the distribution of the INT gradient 1102 may be distorted in a process of scaling the range of the INT gradient 1102 in accordance with the range of the INT weight 1104. When the distribution of the INT gradient 1102 is distorted, the distribution of the INT weight 1104 may also be distorted. Because the INT gradient 1102 may be quantized from the FP gradient 1101 and may have lower precision than the FP gradient 1101, the amount of precision reduction may increase according to scaling, and a quantization error may increase.

An example of a method in which the image processing apparatus 100 according to an embodiment of the disclosure may train the meta model based on the INT data and operate to address data distribution distortion and a quantization error is described with reference to FIG. 12.

FIG. 12 is a view for explaining a quantization operation of the image processing apparatus 100, according to an embodiment of the disclosure.

Referring to FIG. 12, the image processing apparatus 100 according to an embodiment of the disclosure may perform a quantization operation using the model adaptation unit 320-1.

According to an embodiment of the disclosure, a memory 1200 of the image processing apparatus 100 may store an FP weight 1203. For example, the FP weight 1203 may be FP data including thirty-two bits. The range of the FP weight 1203 may be [-1,1], and the precision thereof may be 4e-10. However, the bits, range, and precision of the FP weight 1203 are not limited to the example of FIG. 12.

At operation S1210, as preprocessing for updating an FP gradient 1201 calculated through the image processing apparatus 100 to the FP weight 1203, the image processing apparatus 100 may perform scaling on the FP gradient 1201.

The FP gradient 1201 may be FP data including thirty-two bits. The range of the FP gradient 1201 may be [-0.002, 0.002], and the precision thereof may be 9e-13. However, the bits, range, and precision of the FP gradient 1201 are not limited to the example of FIG. 12.

The image processing apparatus 100 may adjust the range of the FP gradient 1201 so that the range of the FP gradient 1201 is the same as the range of the FP weight 1203. The scaling may refer to an operation of adjusting the range of data. For example, the scaling may include a min-max normalization method of scaling minimum and maximum ranges of the data to be zero ("0") and one ("1"), respectively, a normalization method of performing scaling so that all values are expressed between negative one ("-1") and ("1"), and a standardization method of standardizing the data to have a normal distribution with a mean of 0 and a variance of one ("1").

The image processing apparatus 100 may obtain a scaled FP gradient 1202 by scaling the range of the FP gradient 1201. For example, in FIG. 12, scaling is illustrated as a normalization method of performing scaling so that all values are expressed between negative one ("-1") and one ("1"). However, embodiments are not limited thereto.

The scaled FP gradient 1202 may be FP data including thirty-two bits. The range of the scaled FP gradient 1202 may be [-1, 1], which may be similar to the range of the FP gradient 1203, and the precision thereof may be 4e-10. However, the bits, range, and precision of the FP gradient 1201 are not limited to the example of FIG. 12.

According to an embodiment of the disclosure, in the process of performing scaling so that the range of the FP gradient 1201 is identical with the range of the FP weight 1203, because the precision of the scaled FP gradient 1202 is high, data distribution distortion of the FP gradient 1201 may be minimized. For example, the precision of the scaled FP gradient 1202 may be higher than the precision of the scaled INT gradient 1103 that has undergone quantization and scaling in FIG. 11.

At operation S1220, the image processing apparatus 100 may update the FP gradient 1202 to the FP weight 1203 stored in the memory 1200. The image processing apparatus 100 may obtain an updated FP weight 1204.

At operation S1230, the image processing apparatus 100 may quantize the updated FP weight 1204 to an INT weight 1205.

The updated FP weight 1204 may be FP data including thirty-two bits, but the bits of the updated FP weight 1204 are not limited thereto.

The INT weight 1205 may be INT data including eight bits, but the bits of the INT weight 1205 are not limited thereto.

At operation S1240, the image processing apparatus 100 may perform a convolution operation of a forward propagation process with respect to a next iteration (e.g., i+1) using the INT weight 1205. The image processing apparatus 100 may train the meta model with the training data corresponding to an input image using the INT weight 1205. The image processing apparatus 100 may obtain a meta model based on an INT operation. Accordingly, the amount of computation of repetitive training of the meta model by the image processing apparatus 100 may decrease.

According to an embodiment of the disclosure, because the FP weight 1203 is stored in the memory of the image processing apparatus 100, a quantization process with respect to the FP gradient 1201 may be omitted. In this case, no quantization errors may exist, and the precision of the FP gradient 1201 may be maintained to be relatively high. For example, the precision of the FP gradient 1201 may be higher than the precision of the scaled INT gradient 1103 that has undergone quantization and scaling in FIG. 11.

Accordingly, when scaling is performed so that the range of the FP gradient 1201 corresponds to the range of the FP weight 1203, data distribution distortion of the FP gradient 1201 may be minimized. According to an embodiment of the disclosure, the image processing apparatus 100 may update the FP weight 1203 using the FP gradient 1201 with minimized data distribution distortion, and may perform quantization with respect to the updated FP weight 1204 to thereby train the meta model. Accordingly, data distribution distortion and a quantization error of the image processing apparatus 100 may be minimized.

The image processing apparatus 100 according to an embodiment of the disclosure may reduce a quantization error while training a neural network model based on an INT operation. Accordingly, the image processing apparatus 100 may reduce the amount of computation for training the neural network model, and also may prevent performance of an AI model from being degraded.

The image processing apparatus 100 according to an embodiment of the disclosure may not only perform inference of a neural network model, based on an INT operation, through the above-described quantization process, but may also perform training of the neural network model, based on an INT operation.

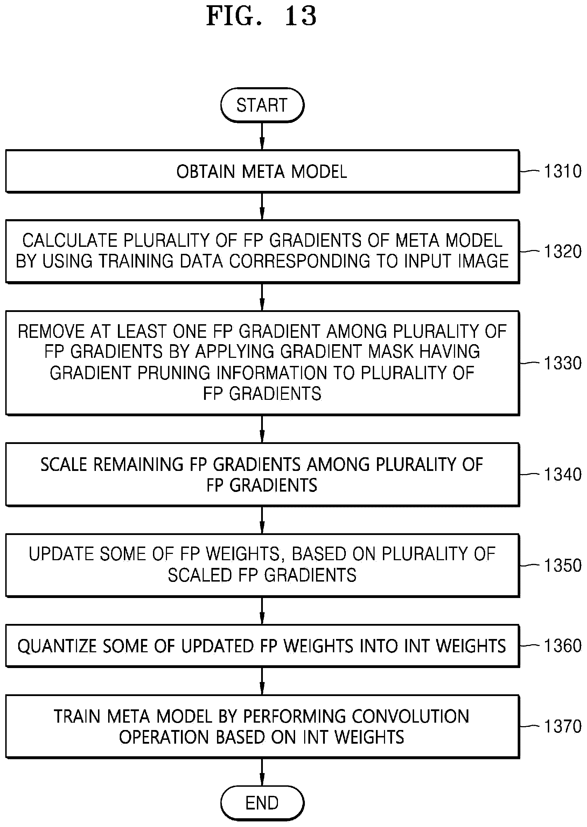

FIG. 13 is a flowchart of an operation method of the image processing apparatus 100 according to an embodiment of the disclosure. The operation method of the image processing apparatus 100 of FIG. 13 corresponds to an operation of the image processing apparatus 100 according to an embodiment disclosed in FIG. 12.

At operation 1310, the image processing apparatus 100 according to an embodiment of the disclosure may obtain the meta model. In some embodiments, operation 1310 may correspond to operation 910 of FIG. 9.

At operation 1320, the image processing apparatus 100 according to an embodiment of the disclosure may calculate the plurality of gradients of the meta model using the training data corresponding to the input image 110. In some embodiments, operation 1320 may correspond to operation 920 of FIG. 9.

According to an embodiment of the disclosure, the gradient 640 calculated by the image processing apparatus 100 may be, or may include, FP data. The image processing apparatus 100 may perform a quantization process based on a calculated FP gradient according to operations 1330 through 1360, and then may train the meta model using the INT data. The image processing apparatus 100 may obtain the meta model based on an INT operation.

At operation 1330, the image processing apparatus 100 according to an embodiment may remove at least one FP gradient from among the plurality of FP gradients by applying the gradient mask having gradient pruning information to the plurality of FP gradients. In some embodiments, operation 1330 may correspond to operation 930 of FIG. 9.

At operation 1340, according to an embodiment of the disclosure, the image processing apparatus 100 may scale the plurality of FP gradients so that the range of the plurality of FP gradients corresponds to the range of weights of the meta model. In some embodiments, the plurality of FP gradients may correspond to the FP gradient 1201 of FIG. 12.

As preprocessing for updating the FP gradient 1201 calculated through the image processing apparatus 100 to the FP weight 1203, the image processing apparatus 100 may perform scaling on the FP gradient 1201. The image processing apparatus 100 may adjust the range of the FP gradient 1201 so that the range of the FP gradient 1201 may be similar to the range of the FP weight 1203. The scaling may refer to an operation of adjusting the range of data. The image processing apparatus 100 may obtain the scaled FP gradient 1202 by scaling the range of the FP gradient 1201.

According to an embodiment of the disclosure, in the process of performing scaling so that the range of the FP gradient 1201 is identical with the range of the FP weight 1203, because the precision of the scaled FP gradient 1202 may be high, data distribution distortion of the FP gradient 1201 may be minimized. For example, the precision of the scaled FP gradient 1202 may be higher than the precision of the scaled INT gradient 1103 that has undergone quantization and scaling in FIG. 11.

According to an embodiment of the disclosure, the image processing apparatus 100 may perform gradient pruning according to operations 930 and 950 of FIG. 9, and then may scale the remaining gradient, update a weight, quantize the updated weight, and train the meta model based on the quantized weight. In this case, the plurality of gradients may be pruned gradients.

According to an embodiment of the disclosure, the image processing apparatus 100 may scale the plurality of gradients calculated according to operation 920 of FIG. 9, update the weights of the plurality of filters, quantize the updated weights, and train the meta model based on the quantized weights.

At operation 1350, according to an embodiment of the disclosure, the image processing apparatus 100 may update some of FP weights, based on the plurality of scaled FP gradients. In some embodiments, the FP weights may correspond to the FP weight 1203 of FIG. 12. The image processing apparatus 100 may update the scaled FP gradient 1202 to the FP weight 1203 stored in the memory 1200. The image processing apparatus 100 may obtain the updated FP weight 1204.

At operation 1360, according to an embodiment of the disclosure, the image processing apparatus 100 may quantize some of the updated FP weights into INT weights. Some of the updated FP weights may be weights updated in accordance with the gradients remaining after performing gradient pruning. The FP weights may correspond to the FP weight 1204 of FIG. 12, and the INT weights may correspond to the INT weight 1205.

At operation 1370, according to an embodiment of the disclosure, the image processing apparatus 100 may train the meta model by performing a convolution operation based on the INT weights. The INT weights may be weights quantized from the weights updated in accordance with the gradients remaining after performing gradient pruning. For example, the image processing apparatus 100 may perform a convolution operation of a forward propagation process with respect to the next iteration (e.g., i+1) using the INT weight 1205. The image processing apparatus 100 may obtain the meta model based on an INT operation. Accordingly, the amount of computation of repetitive training of the meta model by the image processing apparatus 100 may decrease.

The image processing apparatus 100 may obtain a quality-processed output image from an input image, based on the trained meta model.

Because the image processing apparatus 100 according to an embodiment of the disclosure may train the meta model based on an INT operation, the amounts of computation and resource usage used for training the meta model may be reduced.

Because the image processing apparatus 100 according to an embodiment of the disclosure may perform an update on FP weights based on FP gradients and then may perform a quantization process, data distribution distortion may be reduced, and a quantization error may be reduced. Accordingly, the image processing apparatus 100 may reduce the amount of computation for training the meta model, and also may prevent performance of the meta model from being degraded.

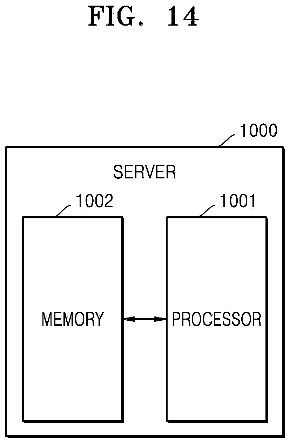

FIG. 14 is a block diagram of an internal structure of a server 1000 according to an embodiment of the disclosure.

Referring to FIG. 14, the server 1000 according to an embodiment of the disclosure may include a processor 1001 and a memory 1002.

The memory 1002 may store one or more instructions. The memory 1002 may store at least one program that the processor 1001 may execute. According to an embodiment of the disclosure, the memory 1002 may include a database that stores training data for training the meta model of the image processing apparatus 100. According to an embodiment of the disclosure, at least one neural network model and/or a pre-defined operation rule may be stored in the memory 1002.

The memory 1002 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk.

The server 1000 may include at least one processor 1001. The processor 1001 may control overall operations of the server 1000. The processor 1001 may control the server 1000 to compress a training data set, by executing the one or more programs stored in the memory 1002.

According to an embodiment of the disclosure, the processor 1001 may execute the one or more instructions to obtain a plurality of low-resolution training images 1620 and 2620 having image qualities which are degraded into a plurality of types of deteriorated image quality based on training image 201 or 1610. The processor 1001 may train a neural network model by applying the training image 201 or 1610 and the plurality of low-resolution training images 1620 and 2620 to the neural network model. The processor 1001 may calculate a plurality of gradients of the trained neural network model by applying the training images 201 or 1610 and the plurality of low-resolution training images 1620 and 2620 to the trained neural network model. The processor 1001 may generate gradient masks 203, 650, and 1860 for removing at least one gradient from among the plurality of calculated gradients.

According to an embodiment of the disclosure, the processor 1001 may execute the one or more instructions to obtain a plurality of modified neural networks 1630 and 2630 respectively corresponding to the plurality of low-resolution training images 1620 and 2620. The processor 1001 may calculate a plurality of test losses 1690 and 2690 for the plurality of modified neural networks 1630 and 2630, respectively, by applying a test image 1650 to each of the plurality of modified neural networks 1630 and 2630. The processor 1001 may update a weight of the neural network model so that a total sum of the plurality of test losses 1690 and 2690 for the plurality of modified neural networks 1630 and 2630 may be minimized.

According to an embodiment of the disclosure, the processor 1001 may execute the one or more instructions to obtain a first low-resolution training image 1620 having an image quality degraded into a first type of deteriorated image quality and a second low-resolution training image 2620 having an image quality degraded into a second type of deteriorated image quality, based on the training image 201 or 1610. The processor 1001 may obtain a first neural network 1670 applying the training image 201 or 1610 and the first low-resolution training image 1620 to the neural network model and a second neural network 2670 applying the training image 201 or 1610 and the second low-resolution training image 2620 to the neural network model. The processor 1001 may calculate a first test loss 1690 applying the test image 1650 to the first neural network 1670 and calculate a second test loss 2690 applying the test image 1650 to the second neural network 2670. The processor 1001 may update the weight of the neural network model, based on the first test loss 1690 and the second test loss 2690.

According to an embodiment of the disclosure, the processor 1001 may execute one or more instructions to generate a gradient mask 203, 650, or 1860 each having a first value for removing at least one gradient from among the plurality of gradients and a second value for maintaining the remainder (e.g., one or more remaining gradients) of the plurality of gradients.

According to an embodiment of the disclosure, the processor 1001 may execute the one or more instructions to generate the gradient mask 203, 650, or 1860 each having a vector value of "0" with respect to gradients corresponding to n minimum values among respective values for the plurality of gradients, the respective values being obtained by quantifying the plurality of gradients, and a vector value of " 1" with respect to the remaining gradient.

According to an embodiment of the disclosure, the processor 1001 may execute the one or more instructions to quantify the plurality of gradients for each gradient filter to generate the gradient mask 203, 650, or 1860 each having a vector value of "0" with respect to gradients having values less than or equal to a threshold value from among respective values of the plurality of gradients obtained through the quantification and a vector value of " 1" with respect to gradients having values that exceed the threshold value.

According to an embodiment of the disclosure, the processor 1001 may execute the one or more instructions to sum pieces of data in a gradient data matrix for each of a plurality of gradient filters corresponding to the plurality of gradients to thereby quantify the plurality of gradients.

According to an embodiment of the disclosure, for a neural network model including at least one convolutional layer, the size of the gradient mask 203, 650, or 1860 for the first convolutional layer may be equal to the number of gradients for updating each of the plurality of filters within the first convolutional layer.

According to an embodiment of the disclosure, the size of the gradient mask 203, 650, or 1860 for the first convolutional layer may be equal to the number of filters of the first convolutional layer.

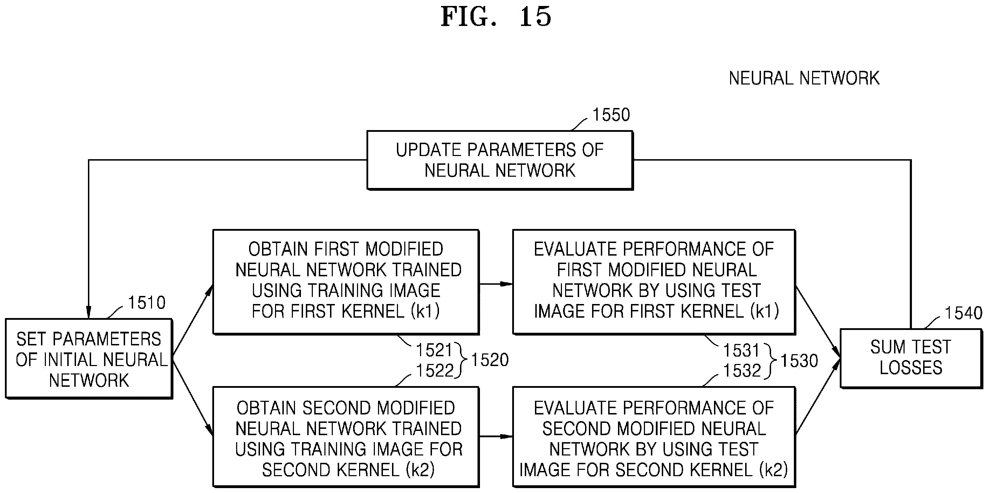

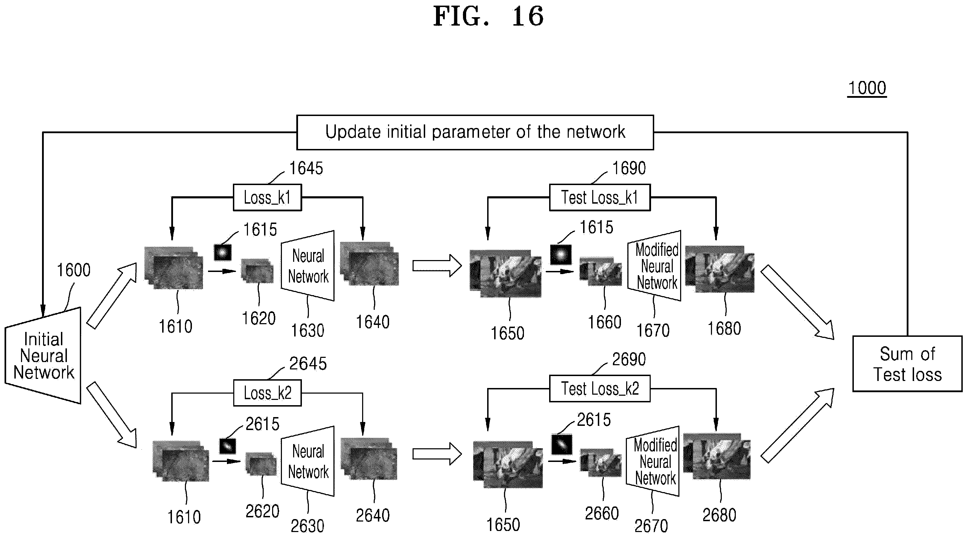

FIG. 15 is a flowchart of a method, performed by the server 1000, of training a meta model, according to an embodiment of the disclosure. FIG. 16 is a diagram for explaining a process, performed by the server 1000, of training a meta model, according to an embodiment of the disclosure.

Referring to FIGS. 15 and 16, at operation 1510, the server 1000 according to an embodiment of the disclosure may set parameters of an initial neural network 1600. For example, the initial neural network 1600 may be a neural network that has not yet been trained with a large training data set. For example, the initial neural network 1600 may be a neural network that has not yet been subjected to meta learning. **In** some embodiments, the initial neural network 1600 may be or may correspond to the initial meta model 210 of FIG. 2. The server 1000 may set initial parameters of the initial neural network 1600 to be trained. The server 1000 may generate a meta-learned neural network by training the initial neural network 1600 having initial parameters.

At operation 1520, the server 1000 according to an embodiment of the disclosure may train a neural network using a training image for a plurality of kernels to obtain a plurality of modified neural networks. The plurality of kernels may include image quality degradation kernels. For example, the image quality degradation kernels may include a kernel that processes compression degradation with respect to a training image, a kernel that processes blurring degradation, a kernel that processes down sampling, and a kernel that processes noise addition. The server 1000 may apply each of the plurality of kernels to the training image to generate a plurality of low-resolution training images having image qualities which are degraded into a plurality of types of deteriorated image quality. The server 1000 may train the neural network using the training image and the plurality of low-resolution training images. The server 1000 may obtain the plurality of modified neural networks by training the neural network using the training image and the plurality of low-resolution training images. Each of the plurality of modified neural networks may be a neural network having high-resolution performance for each of the plurality of kernels.

For example, referring to FIG. 16, the server 1000 may train the neural network 1630 using the training image 1610 for a first kernel (k1) 1615, and may obtain a first modified neural network 1670 having high-resolution performance for the first kernel (k1) 1615 at operation 1521. The server 1000 may generate the first low-resolution training image 1620 by applying the first kernel (k1) 1615 to the training image 1610. The server 1000 may perform at least one of compression deterioration, blurring deterioration, down sampling, or noise addition on the training image 1610 to generate the first low-resolution training image 1620 having a deteriorated image quality. The server 1000 may train the neural network 1630 by applying the training image 1610 and the first low-resolution training image 1620 to the neural network 1630. The server 1000 may calculate a first loss (Loss_k1) 1645 which may be a difference between an output image 1640 generated by inputting the first low-resolution training image 1620 to the neural network 1630 and the training image 1610. The server 1000 may update the parameters of the neural network 1630 until the first loss 1645 is minimized. The server 1000 may obtain the first modified neural network 1670 having the updated parameters.

For example, the server 1000 may generate the second low-resolution training image 2620 with a degraded image quality by applying a second kernel (k2) 2615 to the training image 1610. The server 1000 may train the neural network 2630 using the training image 1610 and the second low-resolution training image 2620. The server 1000 may obtain the second modified neural network 2670 with high-resolution performance for the second kernel (k2) 2615. The second modified neural network 2670 may be a neural network having the updated parameters based on the second kernel (k2) 2615 at operation 1522.

According to an embodiment of the disclosure, the first kernel 1615 and the second kernel 2615 may be different types of image quality degradation kernels. The parameters of the first modified neural network 1670 and the parameters of the second modified neural network 2670 may be different from each other.

In the disclosure, respective operations of training the neural network 1630 using the training image 1610 for the first kernel 1615 and training the neural network 2630 using the training image 1610 for the second kernel 2615 may be referred to as internal loops.

At operation 1530, the server 1000 according to an embodiment of the disclosure may evaluate performances of the plurality of modified neural networks using a test image for the plurality of kernels. The server 1000 may calculate a plurality of losses from the plurality of modified neural networks. The losses calculated by the plurality of modified neural networks may be referred to as test losses. The server 1000 may apply each of the plurality of kernels to the test image to generate a plurality of low-resolution test images having image qualities which are degraded into a plurality of types of deteriorated image quality. The server 1000 may train each of the plurality of modified neural networks using the test image and the plurality of low-resolution test images. The server 1000 may evaluate the performances of the plurality of modified neural networks using the test image and the plurality of low-resolution test images. The server 1000 may calculate a test loss for each of the plurality of modified neural networks based on a result of the performances.

For example, referring to FIG. 16, the server 1000 may evaluate performance of the first modified neural network 1670 using the test image 1650 for the first kernel (k1) 1615 at operation 1531. The server 1000 may generate a first low-resolution test image 1660 by applying the first kernel (k1) 1615 to the test image 1650. The server 1000 may perform at least one of compression deterioration, blurring deterioration, down sampling, or noise addition on the test image 1650 to generate the first low-resolution test image 1660 having a deteriorated image quality. The server 1000 may evaluate the performance of the first modified neural network 1670 by applying the test image 1650 and the first low-resolution test image 1660 to the first modified neural network 1670. The server 1000 may calculate the first test loss (Test Loss_k1) 1690, which may be a difference between an output image 1680 generated by inputting the first low-resolution test image 1660 to the first modified neural network 1670 and the test image 1650. The first test loss 1690 may be performance evaluation data of the first modified neural network 1670.

For example, the server 1000 may evaluate performance of the second modified neural network 2670 using the test image 1650 for the second kernel (k2) 2615 at operation 1532. The server 1000 may generate a second low-resolution test image 2660 by applying the second kernel (k2) 2615 to the test image 1650. The server 1000 may evaluate the performance of the second modified neural network 2670 by applying the test image 1650 and the second low-resolution test image 2660 to the second modified neural network 2670. The server 1000 may calculate the second test loss (Test Loss_k2) 2690, which may be a difference between an output image 2680 generated by inputting the second low-resolution test image 2660 to the second modified neural network 2670 and the test image 1650. The second test loss 2690 may be performance evaluation data of the second modified neural network 2670.

According to an embodiment of the disclosure, the first test loss 1690 of the first modified neural network 1670 and the second test loss 2690 of the second modified neural network 2670 may be different from each other.

At operation 1540, the server 1000 according to an embodiment of the disclosure may sum test losses. The server 1000 may sum a plurality of test losses calculated from the plurality of modified neural networks. For example, the server 1000 may sum the first test loss 1690 calculated from the first modified neural network 1670 and the second test loss 2690 calculated from the second modified neural network 2670.

At operation 1550, the server 1000 according to an embodiment of the disclosure may generate a trained neural network, by updating parameters of the initial neural network 1600, based on the plurality of test losses. The server 1000 may update the parameters of the initial neural network 1600 until a sum of the plurality of test losses is minimized. The sever 1000 may obtain a neural network having the updated parameters from the initial neural network 1600. The sever 1000 may obtain a neural network trained based on the initial neural network 1600, for example, a meta-learned neural network. According to an embodiment of the disclosure, the m-learned neural network may correspond to the meta model 220 of FIG. 2. The meta model 220 may be a result of reflecting, in the initial neural network 1600, a result of training a plurality of modified neural networks. In the disclosure, this may be referred to as an external loop.

According to an embodiment of the disclosure, the meta-learned neural network may have superior performance in generating high-resolution images, compared to the initial neural network 1600. A speed at which the meta-learned neural network may adapt to an actual input image in the image processing apparatus 100 may be greater than that of the initial neural network 1600.

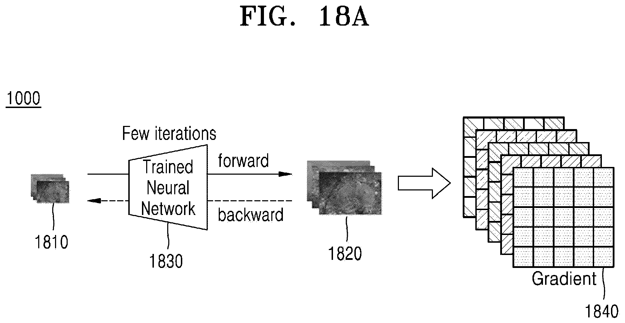

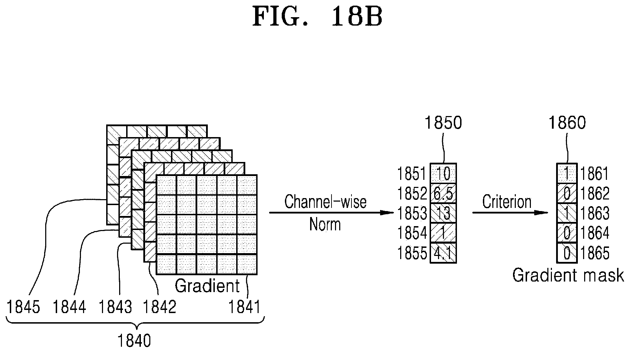

FIG. 17 is a flowchart of a method, performed by the server 1000, of obtaining a gradient mask, according to an embodiment of the disclosure. FIG. 18A is a diagram for explaining a process, performed by the server 1000, of calculating a gradient through a trained neural network, according to an embodiment of the disclosure. FIG. 18B is a diagram for explaining a process, performed by the server 1000, of obtaining a gradient mask, according to an embodiment of the disclosure.

Referring to FIG. 17, at operation 1710, the server 1000 may apply a training image and at least one low-resolution training image to the trained meta model to calculate a plurality of gradients of the trained meta model.

Referring to FIG. 18A, a trained neural network model 1830 may correspond to a neural network trained from the initial neural network 1600 in FIGS. 15 and 16. **In** some embodiments, the trained neural network model 1830 may correspond to the meta model 220 of FIG. 2. The server 1000 may calculate a gradient 1840 based on the trained neural network model 1830 by simulating a general meta-learning process. For example, the server 1000 may train the gradient 1840 of the trained neural network model 1830 by applying a training image 1810 and a plurality of low-resolution training images to the trained neural network model 1830. The training image 1810 may correspond to the training image 1610 of FIG. 16, the plurality of low-resolution training images may correspond to the plurality of low-resolution training images 1620 and 2620 of FIG. 16, and the plurality of kernels may correspond to the plurality of kernels 1615 and 2615 of FIG. 16. The output image 1820 may correspond to the output image 1640 of FIG. 16.

Because the server 1000 may calculate a gradient, which may be an intermediate product of a back propagation process, and may generate a gradient mask, using a pre-trained neural network, the weight of the trained neural network model 1830 may be not updated. The server 1000 may obtain the gradient 1840 and the gradient mask 1860 through only few iterations with respect to the trained meta model 1830.

Because the trained neural network model 1830 may include a plurality of convolutional layers, the server 1000 may calculate a plurality of gradients 1840, the number of which may correspond to the number of filters within each of the plurality of convolutional layers. For example, a first gradient 1841 may be a gradient of a loss function with respect to the weight of a first filter, and may represent information for updating the weight of the first filter. A second gradient 1842, a third gradient 1843, a fourth gradient 1844, and a fifth gradient 1845 may correspond to a second filter, a third filter, a fourth filter, and a fifth filter, respectively. The plurality of gradients 1840 may also be referred to as a plurality of gradient filters or a plurality of gradient maps.

Referring again to FIG. 17, at operation 1720, the server 1000 may identify a gradient contributing to an output of the meta model by a small degree, from among the plurality of gradients.

According to an embodiment of the disclosure, the degree to which the gradient may contribute to the output of the meta model may increase as the value of the gradient increases. For example, the gradient having a large gradient value may have a large degree of weight updating, so the weight of the meta model may be optimized quickly. The degree of contribution to the output of the meta model may refer to the degree of improvement in the high-resolution performance of the meta model.

According to an embodiment of the disclosure, the server 1000 may quantify the plurality of gradients 1840 for each gradient filter in order to select a gradient that may significantly contribute to the output of the meta model. According to an embodiment of the disclosure, the server 1000 may identify n gradients having minimum values among the plurality of quantified gradients 1840 (where n is a natural number). The server 1000 may generate the gradient mask 1860 by setting a vector value for removing the n gradients having the minimum values. According to an embodiment of the disclosure, the server 1000 may identify gradients corresponding to values below a threshold value from among the plurality of quantified gradients 1840. The server 1000 may generate the gradient mask 1860 by setting a vector value for removing the gradients corresponding to the values below the threshold value.

For example, referring to FIG. 18B, the server 1000 may quantify the plurality of gradients 1840 for each gradient filter. The plurality of gradients 1840 may have gradient matrix data of k rows and k columns for each gradient filter. The server 1000 may have a quantified gradient by summing data in the gradient matrix data for each gradient filter using a normalization process. The quantified gradient may be expressed as a matrix 1850. For example, a sum of 5X5 gradient data corresponding to the first gradient 1841 may be located in a first row 1851 of the matrix 1850. The second gradient 1842 may correspond to a second row 1852, the third gradient 1843 may correspond to a third row 1853, the fourth gradient 1844 may correspond to a fourth row 1854, and the fifth gradient 1845 may correspond to a fifth row 1855. The number of rows of the matrix 1850 may be 5, which may be equal to the number of gradients. According to an embodiment of the disclosure, a method of quantifying the plurality of gradients 1840 is not limited to the above-described example.

For example, the server 1000 may determine that, in the matrix 1850 corresponding to the quantified gradient, the second row 1852, the fourth row 1854, and the fifth row 1855 correspond to 3 minimum values. **In** some embodiments, for example, the server 1000 may determine that, in the matrix 1850 corresponding to the quantified gradient, values of the second row 1852, the fourth row 1854, and the fifth row 1855 are less than or equal to a threshold value (e.g., a value of 7).

At operation 1730, the server 1000 may train a gradient mask by setting a vector value to remove the identified gradient.

According to an embodiment of the disclosure, the gradient mask 1860 may include information for maintaining a gradient significantly contributing to an output of the meta model. For example, the gradient mask 1860 may include information for maintaining a gradient having a large gradient value and removing a gradient hvaing a small gradient value. The server 1000 may generate the gradient mask 1860 having a vector value of "0" for removing at least one of the plurality of gradients 1840 and a vector value of "1" for maintaining the remainder of the plurality of gradients 1840. The gradient corresponding to a vector value of "0" may have a small contribution to the output of a neural network. The gradient corresponding to a vector value of "1" may have a large contribution to the output of a neural network.

For example, the server 1000 may set the gradient mask 1860 to have a vector value of "0" at the second row 1852, the fourth row 1854, and the fifth row 1855 in the matrix 1850 corresponding to the quantified gradient. The server 1000 may set the gradient mask 1860 to have a vector value of "1" at the first row 1851 and the third row 1853 in the matrix 1850 corresponding to the quantified gradient.

According to an embodiment of the disclosure, the gradient mask 1860 may be used in a process of training the meta model of the image processing apparatus 100.

In the above-described embodiment of the disclosure, the gradient mask is illustrated as being obtained through a channel-wise method. However, embodiments are not limited thereto. For example, the gradient mask may be obtained through a layer-wise method. For example, a gradient mask for removing a gradient may be generated based on the convolutional layers of the neural network through a layer-wise method. For example, the gradient mask may include information for updating some of the convolutional layers and not updating the others.

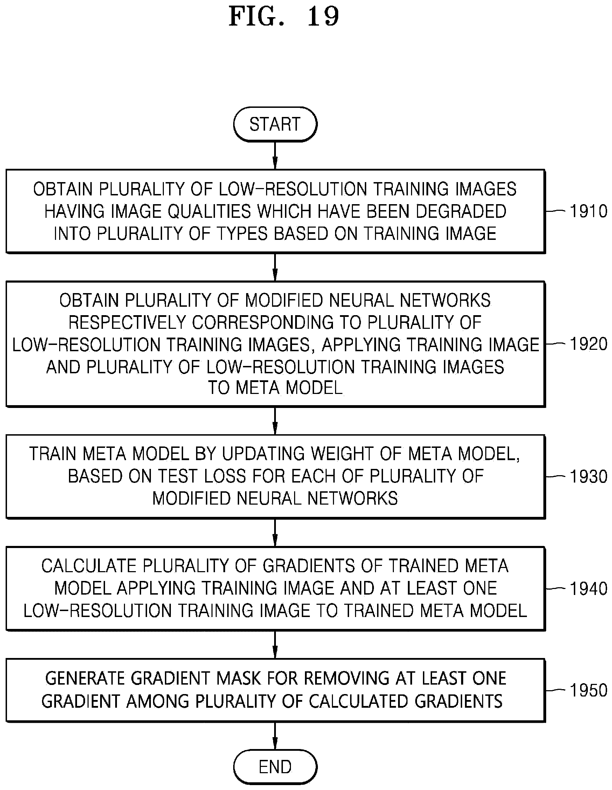

FIG. 19 is a flowchart of a method, performed by the server 1000, of training a meta model, according to an embodiment of the disclosure.

At operation 1910, the server 1000 according to an embodiment of the disclosure may obtain a plurality of low-resolution training images having image qualities that have been degraded into a plurality of types of deteriorated image quality in based on a training image.

According to an embodiment of the disclosure, the first low-resolution training image may be caused to have deteriorated image qualities by performing at least one of compression deterioration, blurring deterioration, down sampling, or noise addition on the training image.

At operation 1920, the server 1000 according to an embodiment of the disclosure may apply the training image and the plurality of low-resolution training images to the meta model to obtain a plurality of modified neural networks respectively corresponding to the plurality of low-resolution training images.

The server 1000 according to an embodiment of the disclosure may obtain a first low-resolution training image having an image quality degraded into a first type of deteriorated image quality and a second low-resolution training image having an image quality degraded into a second type of deteriorated image quality, based on the training image.

The server 1000 according to an embodiment of the disclosure may apply the training image and the first low-resolution training image to the meta model to obtain a first modified neural network. The server 1000 may apply the training image and the second low-resolution training image to the meta model to obtain a second modified neural network.

At operation 1930, the server 1000 according to an embodiment of the disclosure may train the meta model by updating the weight of the meta model, based on a test loss for each of the plurality of modified neural networks.

The server 1000 according to an embodiment of the disclosure may calculate the test loss for each of the plurality of modified neural networks by applying a test image to each of the plurality of modified neural networks. For example, the server 1000 according to an embodiment may calculate a first test loss for the first modified neural network by applying the test image to the first modified neural network. For example, the server 1000 according to an embodiment may calculate a second test loss for the second modified neural network by applying the test image to the second modified neural network.

The server 1000 according to an embodiment of the disclosure may update a weight of the meta model so that a total sum of the respective test losses for the plurality of modified neural networks is minimized. For example, the server 1000 may update the weight of the meta model, based on the first test loss and the second test loss.

At operation 1940, the server 1000 according to an embodiment of the disclosure may apply the training image and at least one low-resolution training image to the trained meta model to calculate a plurality of gradients of the trained meta model. **In** some embodiments, operation 1940 may correspond to operation 1710 of FIG. 17.

At operation 1950, the server 1000 according to an embodiment of the disclosure may generate a gradient mask for removing at least one gradient from among the plurality of calculated gradients.

The server 1000 according to an embodiment of the disclosure may identify a gradient contributing to an output of the meta model by a small degree, from among the plurality of gradients.

The server 1000 according to an embodiment of the disclosure may generate a gradient mask having a first value for removing at least one gradient from among the plurality of gradients and a second value for maintaining the remainder of the plurality of gradients.

The gradient mask according to an embodiment of the disclosure may have a vector value for maintaining a gradient significantly contributing to an output of the meta model. As the value of the gradient increases, the degree to which the gradient contributes to the output of the meta model may increase.

According to an embodiment of the disclosure, the server 1000 may provide a meta model that may be quickly trained based on actual data in the image processing apparatus 100, by pre-training the meta model for various image quality degradation scenarios. The server 1000 may preserve a gradient for updating the weight of a filter contributing to improving the high-resolution performance of the meta model and repeatedly updates only the weight of the filter corresponding to the preserved gradient, and thus may quickly train the meta model.

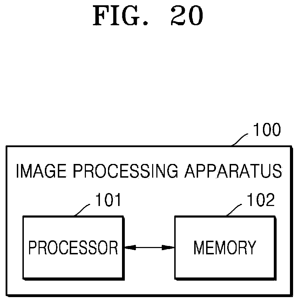

FIG. 20 is a block diagram of an image processing apparatus according to an embodiment of the disclosure.

Referring to FIG. 20, the image processing apparatus 100 according to an embodiment of the disclosure may include a processor 101 and a memory 102.

The image processing apparatus 100 may be fixed or movable, and may be, but is not limited to, a digital TV capable of digital broadcasting reception. The image processing apparatus 100 may include at least one of a desktop PC, a smartphone, a tablet PC, a mobile phone, a video phone, an electronic book (e-book) reader, a laptop PC, a netbook computer, a digital camera, a personal digital assistant (PDA), a portable multimedia player (PMP), a camcorder, a navigation wearable device, a smart watch, a home network system, a security system, or a medical device.

The image processing apparatus 100 may be implemented as not only a flat display apparatus but also a curved display apparatus having a curvature or a flexible display apparatus having an adjustable curvature. Examples of an output resolution of the image processing apparatus 100 may include any of various resolutions such as HD, full HD, ultra HD, or a resolution that is higher or clearer than an ultra HD.

The memory 102 may store one or more instructions. The memory 102 may store at least one program that the processor 101 executes. At least one neural network and/or a pre-defined operation rule or AI model may be stored in the memory 102. The memory 102 may store data that is input to the image processing apparatus 100 or output by the image processing apparatus 100.

The memory 102 may include at least one type of storage medium selected from among a flash memory type, a hard disk type, a multimedia card micro type, a card type memory (for example, an SD or XD memory), a RAM, an SRAM, a ROM, an EEPROM, a PROM, a magnetic memory, a magnetic disk, and an optical disk.

According to an embodiment of the disclosure, the memory 102 may store a gradient mask. The gradient mask may represent information for removing or maintaining a gradient according to the degree to which the gradient contributes to the output of a trained meta model.

According to an embodiment of the disclosure, the memory 102 may store the FP weight 1203.

The processor 101 may include one or more processors. The processor 101 may control overall operations of the image processing apparatus 100. The processor 101 may control the image processing apparatus 100 to perform a function, by executing the one or more programs stored in the memory 102.

According to an embodiment of the disclosure, the processor 101 may be configured to execute the one or more instructions to obtain a neural network model for image quality processing of the input image 110. The processor 101 is further configured to calculate a plurality of gradients by partially differentiating weights of the neural network model with respect to a loss of the neural network model, by applying training data corresponding to the input image 110 to the neural network model. The processor 101 may be further configured to remove at least one gradient from among the plurality of gradients by applying the gradient mask 203, 650, or 1860 having gradient pruning information to the plurality of gradients. The processor 101 is further configured to train the neural network model by updating weights of the neural network model based on the remaining gradient among the plurality of gradients. The processor 101 is further configured to obtain the quality-processed output image 120 from the input image 110, based on the trained neural network model.

According to an embodiment of the disclosure, the gradient mask 203, 650, or 1860 may include information for removing at least one gradient from among the plurality of gradients and information for maintaining the remaining gradient except for the at least one gradient.

According to an embodiment of the disclosure, the processor 101 is further configured to execute the one or more instructions to calculate the plurality of gradients for updating weights of the plurality of filters, corresponding to each of the plurality of filters within at least one convolutional layer of the neural network model. The processor 101 is further configured to remove the at least one gradient corresponding to at least one filter among the plurality of filters, based on the gradient mask 203, 650, or 1860. The processor 101 may be further configured to update the weights of the remaining filters, based on the remaining gradient corresponding to the remaining filters among the plurality of filters.

According to an embodiment of the disclosure, the gradient mask 203, 650, or 1860 may include information for removing gradients corresponding to n minimum values among values obtained by quantifying the plurality of gradients.

According to an embodiment of the disclosure, the gradient mask 203, 650, or 1860 may include information for removing gradients having values less than or equal to a threshold value from among the values obtained by quantifying the plurality of gradients.

According to an embodiment of the disclosure, for a neural network model including at least one convolutional layer, the size of the gradient mask 203, 650, or 1860 for the first convolutional layer may be equal to the number of gradients for updating each of the plurality of filters within the first convolutional layer. According to an embodiment of the disclosure, the processor 101 may be configured to execute the one or more instructions to adjust a range of the plurality of gradients corresponding to FP data so that the range of the plurality of gradients corresponds to a range of the weights of the neural network model.

The processor 101 may be further configured to update a plurality of gradients having the adjusted range to the FP weight 1203. The processor 101 may be further configured to convert the FP weight 1204 into the INT weight 1205 by quantizing the updated FP weight 1204. The processor 101 may be further configured to perform a convolution operation on the neural network model, based on the INT weight 1205.

According to an embodiment of the disclosure, the processor 101 may be further configured to execute the one or more instructions to remove at least one FP gradient from among the plurality of FP gradients by applying the gradient mask to the plurality of FP gradients. The processor 101 may be further configured to update some of the FP weights, based on the remaining FP gradients among the plurality of FP gradients. The processor 101 may be further configured to convert some of the updated FP weights into INT weights.

According to an embodiment of the disclosure, the processor 101 may be further configured to execute the one or more instructions to obtain an image quality of the input image 110. The processor 101 may be further configured to obtain a low-resolution image by performing at least one of compression deterioration, blurring deterioration, resolution adjustment, or noise addition on the input image 110, based on an image quality value of the input image 110.

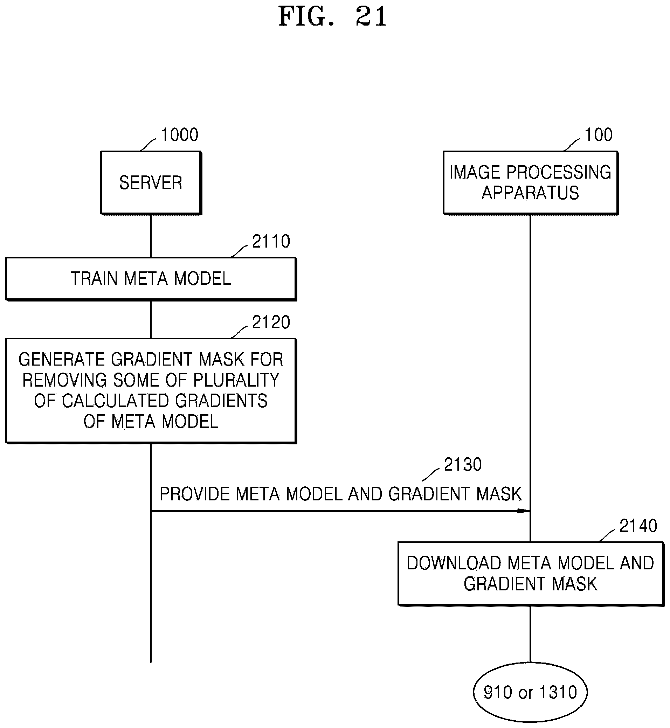

FIG. 21 is a flowchart of an operation method of the image processing apparatus 100 and the server 1000, according to an embodiment of the disclosure.

Referring to FIG. 21, at operation 2110, the server 1000 according to an embodiment of the disclosure may train a meta model. The server 1000 may obtain a plurality of low-resolution training images having image qualities which are degraded into a plurality of types of deteriorated image quality based on a training image. The server 1000 may apply the training image and the plurality of low-resolution training images to the meta model to obtain a plurality of modified neural networks respectively corresponding to the plurality of low-resolution training images. The server 1000 may train the meta model by updating the weight of the meta model, based on a test loss for each of the plurality of modified neural networks. An example of this is described above with reference to FIGS. 15 and 16.

At operation 2120, the server 1000 according to an embodiment of the disclosure may calculate a plurality of gradients of the meta model by applying the training image to the meta model. The server 1000 may generate a gradient mask for removing some of the plurality of gradients.

At operation 2130, the server 1000 according to an embodiment of the disclosure may provide the meta model and a gradient mask to the image processing apparatus 100. A meta model trained using a specific training image may be paired with a gradient mask corresponding to the meta model. The server 1000 may provide a plurality of meta models and a plurality of gradient masks corresponding thereto. The server 1000 may provide the meta model and the gradient mask to the image processing apparatus 100 by communicating with the image processing apparatus 100 using a communication interface or using an offline upload process. At operation 2140, the image processing apparatus 100 according to an embodiment of the disclosure may download the meta model and the gradient mask from the server 1000. The image processing apparatus 100 may download the meta model and the gradient mask by communicating with the server 1000 using the communication interface or an offline upload process.

According to an embodiment of the disclosure, the image processing apparatus 100 that has obtained the meta model and the gradient mask may operate according to operation 910 of FIG. 9. According to an embodiment of the disclosure, the image processing apparatus 100 that has obtained the meta model and the gradient mask may operate according to operation 1310 of FIG. 13.

The machine-readable storage medium may be provided as a non-transitory storage medium. The non-transitory storage medium may be a tangible device and only means that it does not contain a signal (e.g., electromagnetic waves). This term may not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which may be a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

**Claims**

1. An image processing apparatus (100) comprising:

at least one processor (101) ; and
a memory configured to store one or more instructions which, when executed by the at least one processor, cause the image processing apparatus to:

obtain a neural network model for performing image quality processing on an input image (110);
calculate a plurality of gradients by partially differentiating weights of the neural network model with respect to a loss of the neural network model, by applying training data corresponding to the input image (110) to the neural network model;
remove at least one gradient from among the plurality of gradients by applying a gradient mask (203, 650, 1860) comprising gradient pruning information to the plurality of gradients;
train the neural network model by updating the weights of the neural network model based on one or more remaining gradients from among the plurality of gradients; and
obtain a quality-processed output image (120) based on the input image (110), using the trained neural network model.

2. The image processing apparatus (100) of claim 1, wherein the gradient mask(203, 650, 1860) comprises information for removing the at least one gradient from among the plurality of gradients and information for maintaining the one or more remaining gradients from among the plurality of gradients.

3. The image processing apparatus (100) of claim 1 or 2, wherein the one or more instructions further cause the image processing apparatus to:

calculate the plurality of gradients for updating weights of a plurality of filters, corresponding to each filter of the plurality of filters within at least one convolutional layer included in the neural network model;
remove the at least one gradient corresponding to at least one filter from among the plurality of filters, based on the gradient mask (203, 650, 1860); and
update weights of one or more remaining filters from among the plurality of filters based on the one or more remaining gradients corresponding to the one or more remaining filters.

4. The image processing apparatus (100) of one of claims 1 through 3, wherein the gradient mask (203, 650, 1860) comprises information for removing gradients corresponding to n minimum values from among a plurality of values obtained by quantifying the plurality of gradients, where n is a natural number.

5. The image processing apparatus (100) of one of claims 1 through 4, wherein the gradient mask (203, 650, 1860) comprises information for removing gradients corresponding to values that are less than or equal to a threshold value from among the plurality of values obtained by quantifying the plurality of gradients.

6. The image processing apparatus (100) of one of claims 1 through 5, wherein, for the neural network model comprising the at least one convolutional layer, a size of the gradient mask (203, 650, 1860) for a first convolutional layer is equal to a number of gradients for updating the each filter of the plurality of filters within the first convolutional layer.

7. The image processing apparatus (100) of one of claims 1 through 6, wherein the memory (102) is further configured to store floating-point (FP) weights, and
wherein the one or more instructions further cause the image processing apparatus to:

obtain an adjusted plurality of gradients by adjusting a range of the plurality of gradients corresponding to FP data such that the range of the plurality of gradients corresponds to a range of the weights of the neural network model (S1210);
update the adjusted plurality of gradients to the FP weights(1203) (S1220);
convert the FP weights into integer (INT) weights(1205) by quantizing the updated FP weights(1204) (S1230); and
perform a convolution operation on the neural network model, based on the INT weights(1205) (S1240).

8. The image processing apparatus (100) of one of claims 1 through 7, wherein the one or more instructions further cause the image processing apparatus to:

remove at least one FP gradient of a plurality of FP gradients by applying the gradient mask to the plurality of FP gradients (1330);
update some FP weights of the FP weights, based on remaining FP gradients from among the plurality of FP gradients (1350); and
convert some of the updated FP weights to INT weights (1360).

9. The image processing apparatus (100) of one of claims 1 through 8, wherein the one or more instructions further cause the image processing apparatus to:

determine an image quality value of the input image (110); and
obtain a low-resolution image by performing at least one of compression deterioration, blurring deterioration, resolution adjustment, or noise addition on the input image (110), based on the image quality value of the input image (110).

10. A method of training a neural network model, the method comprising:

obtaining a plurality of low-resolution training images (1620, 2620) having image qualities which are degraded into a plurality of types of deteriorated image quality based on a training image (201, 1610);
training the neural network model by applying the training image (201, 1610) and the plurality of low-resolution training images (1620, 2620) to the neural network model;
calculating a plurality of gradients of the trained neural network model by applying the training image (201, 1610) and the plurality of low-resolution training images (1620, 2620) to the trained neural network model; and
generating a gradient mask (203, 650, 1860) for removing at least one gradient from among the plurality of gradients.

11. The method of claim 10, wherein the training of the neural network model comprises:

obtaining a plurality of modified neural networks (1630, 2630) corresponding to the plurality of low-resolution training images (1620, 2620);

calculating a plurality of test losses (1690, 2690) for the plurality of modified neural networks (1630, 2630) by applying a test image (1650) to each modified neural network of the plurality of modified neural networks (1630, 2630); and

updating a weight of the neural network model so that a sum of the plurality of test losses (1690, 2690) for the plurality of modified neural networks (1630, 2630) is minimized.

12. The method of claim 10 or 11, wherein the obtaining of the plurality of low-resolution training images (1620, 2620) comprises obtaining a first low-resolution training image (1620) having an image quality degraded into a first type of deteriorated image quality and a second low-resolution training image having an image quality degraded into a second type of deteriorated image quality based on the training image (201, 1610), and

wherein the training of the neural network model comprises:

obtaining a first neural network (1670) by applying the training image (201, 1610) and the first low-resolution training image (1620) to the neural network model and obtaining a second neural network (2670) by applying the training image (201, 1610) and the second low-resolution training image (2620) to the neural network model;

calculating a first test loss (1690) by applying the test image (1650) to the first neural network (1670) and calculating a second test loss (2690) by applying the test image(1650) to the second neural network (2670); and

updating the weight of the neural network model based on the first test loss(1690) and the second test loss (2690).

13. The method of one of claims 10 through 12, wherein the gradient mask comprises a first value for removing the at least one gradient of the plurality of gradients and a second value for maintaining one or more remaining gradients of the plurality of gradients.

14. The method of one of claims 10 through 13, wherein the gradient mask has a vector value of "0" associated with gradients corresponding to n minimum values from among values for the plurality of gradients, wherein the values are obtained by quantifying the plurality of gradients, and a vector value of "1" associated with the one or more remaining gradients, wherein n is a natural number.

15. The method of claim 13 or 14, further comprising quantifying the plurality of gradients by summing pieces of data in a gradient data matrix for each gradient filter of a plurality of gradient filters corresponding to the plurality of gradients.

# FIG. 1

INPUT IMAGE

110

100

⇕

1000

SERVER

OUTPUT IMAGE

120

# FIG. 2

SERVER ——1000

IMAGE PROCESSING APPARATUS ——100

201
TRAINING IMAGE

202

210
INITIAL META MODEL

220
TRAINED META MODEL

110
INPUT IMAGE

250
LOW-RESOLUTION IMAGE

110
INPUT IMAGE

230
META MODEL

GRADIENT MASK ——203

120
OUTPUT IMAGE

EP 4 528 631 A1

# FIG. 3

# FIG. 4

FIG. 5

# FIG. 6

730

F1 F2 F3 F4 F5 F6 F7 F8 F9 F10 F11 F12 F13 F14 F15 F16 F17 F18 F19 F20 F21 F22 F23 F24 F25

705

I1 I2 I3 I4 I5 I6 I7 I8 I9 I10 I11 I12 I13 I14 I15 I16 I17 I18 I19 I20 I21 I22 I23 I24 I25 I26 I27 I28 I29 I30 I31 I32 I33 I34 I35 I36 I37 I38 I39 I40 I41 I42 I43 I44 I45 I46 I47 I48 I49

750

| M1 | M2 | M3 |
|----|----|----|
| M4 | M5 | M6 |
| M7 | M8 | M9 |

⟹ Foward pass

# FIG. 7

i-TH

| F1 | F2 | F3 | F4 | F5 |
| F6 | F7 | F8 | F9 | F10 |
| F11 | F12 | F13 | F14 | F15 |
| F16 | F17 | F18 | F19 | F20 |
| F21 | F22 | F23 | F24 | F25 |

(i+1)TH

$$w^{(l)} = R^{k \times k \times c_{out}}$$

Gradient mask

$$g^{(l)} = R^{k \times k \times c_{out}}$$

$$m^{(l)} = \{0,1\}^{c_{out}}$$

Backward pass

EP 4 528 631 A1

# FIG. 8

# FIG. 9

START

OBTAIN META MODEL — 910

CALCULATE PLURALITY OF GRADIENTS OF META MODEL USING TRAINING DATA CORRESPONDING TO INPUT IMAGE — 920

REMOVE AT LEAST ONE GRADIENT AMONG PLURALITY OF GRADIENTS BY APPLYING GRADIENT MASK HAVING GRADIENT PRUNING INFORMATION TO PLURALITY OF GRADIENTS — 930

TRAIN META MODEL BY UPDATING WEIGHT OF META MODEL, BASED ON REMAINING GRADIENT AMONG PLURALITY OF GRADIENTS — 940

OBTAIN QUALITY-PROCESSED OUTPUT IMAGE FROM INPUT IMAGE, BASED ON TRAINED META MODEL — 950

END

# FIG. 10

IMAGE PROCESSING
APPARATUS — 100

INPUT IMAGE — 110

IMAGE QUALITY
PROCESSOR — 330

OUTPUT IMAGE — 120

MODEL
ADAPTATION UNIT — 320-1

GRADIENT
PRUNING UNIT — 322

QUANTIZER — 324

IMAGE QUALITY
DETERMINER — 310

# FIG. 11

FIG. 12

100

1200

MEMORY

1204

UPDATED
FP WEIGHT(32bit)

S1230

QUANTIZATION

1205

INT WEIGHT(8bit)

S1240

CONVOLUTION
OPERATION

1203 — FP WEIGHT
(32 bit)

range: [−1,1]
prec: 4e−10

(i+1)TH FORWARD PROPAGATION

i−TH BACK PROPAGATION

SCALED
FP GRADIENT(32bit)

range: [−1,1]
prec: 4e−10

UPDATING

SCALING

FP GRADIENT(32bit)

range: [−0.002,0.002]
prec: 9e−13

S1220

1202

S1210

1201

EP 4 528 631 A1

# FIG. 13

START

OBTAIN META MODEL — 1310

CALCULATE PLURALITY OF FP GRADIENTS OF META MODEL BY USING TRAINING DATA CORRESPONDING TO INPUT IMAGE — 1320

REMOVE AT LEAST ONE FP GRADIENT AMONG PLURALITY OF FP GRADIENTS BY APPLYING GRADIENT MASK HAVING GRADIENT PRUNING INFORMATION TO PLURALITY OF FP GRADIENTS — 1330

SCALE REMAINING FP GRADIENTS AMONG PLURALITY OF FP GRADIENTS — 1340

UPDATE SOME OF FP WEIGHTS, BASED ON PLURALITY OF SCALED FP GRADIENTS — 1350

QUANTIZE SOME OF UPDATED FP WEIGHTS INTO INT WEIGHTS — 1360

TRAIN META MODEL BY PERFORMING CONVOLUTION OPERATION BASED ON INT WEIGHTS — 1370

END

# FIG. 14

# FIG. 15

NEURAL NETWORK

UPDATE PARAMETERS OF NEURAL NETWORK — 1550

SET PARAMETERS OF INITIAL NEURAL NETWORK — 1510

OBTAIN FIRST MODIFIED NEURAL NETWORK TRAINED USING TRAINING IMAGE FOR FIRST KERNEL (k1) — 1521

OBTAIN SECOND MODIFIED NEURAL NETWORK TRAINED USING TRAINING IMAGE FOR SECOND KERNEL (k2) — 1522 } 1520

EVALUATE PERFORMANCE OF FIRST MODIFIED NEURAL NETWORK BY USING TEST IMAGE FOR FIRST KERNEL (k1) — 1531

EVALUATE PERFORMANCE OF SECOND MODIFIED NEURAL NETWORK BY USING TEST IMAGE FOR SECOND KERNEL (k2) — 1532 } 1530

SUM TEST LOSSES — 1540

# FIG. 16

EP 4 528 631 A1

# FIG. 17

```
                    ( START )
                        │
                        ▼
  ┌──────────────────────────────────────┐
  │   APPLY TRAINING IMAGE AND AT LEAST   │
  │   ONE LOW-RESOLUTION TRAINING IMAGE   │
  │   TO TRAINED META MODEL TO CALCULATE  │──── 1710
  │   PLURALITY OF GRADIENTS OF TRAINED   │
  │             META MODEL                │
  └──────────────────────────────────────┘
                        │
                        ▼
  ┌──────────────────────────────────────┐
  │    IDENTIFY GRADIENT CONTRIBUTING TO  │──── 1720
  │  OUTPUT OF META MODEL BY SMALL DEGREE │
  └──────────────────────────────────────┘
                        │
                        ▼
  ┌──────────────────────────────────────┐
  │  TRAIN GRADIENT MASK BY SETTING VECTOR│──── 1730
  │   VALUE TO REMOVE IDENTIFIED GRADIENT │
  └──────────────────────────────────────┘
                        │
                        ▼
                    (  END  )
```

# FIG. 18A

1000

Few iterations

Trained Neural Network

forward

backward

1810

1830

1820

Gradient

1840

# FIG. 18B

1850     1860

1851 10
1852 6.5
1853 13
1854 1
1855 4.1

Channel-wise Norm

Criterion

1 1861
0 1862
1 1863
0 1864
0 1865

Gradient mask

1845 1844 1843 1842 1841

Gradient

1840

# FIG. 19

START

OBTAIN PLURALITY OF LOW-RESOLUTION TRAINING IMAGES HAVING IMAGE QUALITIES WHICH HAVE BEEN DEGRADED INTO PLURALITY OF TYPES BASED ON TRAINING IMAGE — 1910

OBTAIN PLURALITY OF MODIFIED NEURAL NETWORKS RESPECTIVELY CORRESPONDING TO PLURALITY OF LOW-RESOLUTION TRAINING IMAGES, APPLYING TRAINING IMAGE AND PLURALITY OF LOW-RESOLUTION TRAINING IMAGES TO META MODEL — 1920

TRAIN META MODEL BY UPDATING WEIGHT OF META MODEL, BASED ON TEST LOSS FOR EACH OF PLURALITY OF MODIFIED NEURAL NETWORKS — 1930

CALCULATE PLURALITY OF GRADIENTS OF TRAINED META MODEL APPLYING TRAINING IMAGE AND AT LEAST ONE LOW-RESOLUTION TRAINING IMAGE TO TRAINED META MODEL — 1940

GENERATE GRADIENT MASK FOR REMOVING AT LEAST ONE GRADIENT AMONG PLURALITY OF CALCULATED GRADIENTS — 1950

END

# FIG. 20

IMAGE PROCESSING APPARATUS  /100

PROCESSOR  /101 ←→ MEMORY  /102

# FIG. 21

SERVER `1000`

IMAGE PROCESSING APPARATUS `100`

TRAIN META MODEL `2110`

GENERATE GRADIENT MASK FOR REMOVING SOME OF PLURALITY OF CALCULATED GRADIENTS OF META MODEL `2120`

PROVIDE META MODEL AND GRADIENT MASK `2130`

DOWNLOAD META MODEL AND GRADIENT MASK `2140`

910 or 1310

## INTERNATIONAL SEARCH REPORT

| | International application No. |
|---|---|
| | **PCT/KR2024/011131** |

**A. CLASSIFICATION OF SUBJECT MATTER**

**G06T 3/4046**(2024.01)i; **G06T 3/4076**(2024.01)i; **G06T 5/60**(2024.01)i; **G06T 5/20**(2006.01)i; **G06N 3/08**(2006.01)i

According to International Patent Classification (IPC) or to both national classification and IPC

**B. FIELDS SEARCHED**

Minimum documentation searched (classification system followed by classification symbols)

G06T 3/4046(2024.01); G06K 9/00(2006.01); G06N 3/04(2006.01); G06N 3/08(2006.01); G06T 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기울기(gradient), 신경망(neural network), 열화 영상(deterioration image), 프루닝(pruning), 가중치(weight), 마스크(mask)

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0032717 A (SAMSUNG ELECTRONICS CO., LTD.) 07 March 2023 (2023-03-07)<br>See paragraphs [0023]-[0155] and claim 2. | 1-15 |
| A | WO 2021-246645 A1 (SAMSUNG ELECTRONICS CO., LTD.) 09 December 2021 (2021-12-09)<br>See paragraphs [0109]-[0121]. | 1-15 |
| A | KR 10-2134405 B1 (CHUNG ANG UNIVERSITY INDUSTRY ACADEMIC COOPERATION FOUNDATION) 15 July 2020 (2020-07-15)<br>See paragraphs [0049]-[0097]. | 1-15 |
| A | KR 10-2019-0136833 A (SEOUL NATIONAL UNIVERSITY R&DB FOUNDATION et al.) 10 December 2019 (2019-12-10)<br>See paragraphs [0025]-[0080]. | 1-15 |
| A | CN 109886404 A (SOUTHEAST UNIVERSITY) 14 June 2019 (2019-06-14)<br>See paragraphs [0021]-[0062]. | 1-15 |

☐ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **31 October 2024** | **31 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011131**

| Patent document cited in search report | | | Publication date (day/month/year) | Patent family member(s) | | | Publication date (day/month/year) |
|---|---|---|---|---|---|---|---|
| KR | 10-2023-0032717 | A | 07 March 2023 | US | 2023-0071693 | A1 | 09 March 2023 |
| WO | 2021-246645 | A1 | 09 December 2021 | KR | 10-2021-0150233 | A | 10 December 2021 |
| KR | 10-2134405 | B1 | 15 July 2020 | None | | | |
| KR | 10-2019-0136833 | A | 10 December 2019 | EP | 3588388 | A1 | 01 January 2020 |
| | | | | KR | 10-2184755 | B1 | 30 November 2020 |
| | | | | US | 11288546 | B2 | 29 March 2022 |
| | | | | US | 2019-0370608 | A1 | 05 December 2019 |
| CN | 109886404 | A | 14 June 2019 | CN | 109886404 | B | 04 August 2023 |

Form PCT/ISA/210 (patent family annex) (July 2022)